# FASCICULE DE BREVET EUROPEEN

(11) **EP 4 020 738 B1**
(45) Date de publication et mention de la délivrance du brevet: **09.12.2026**
(21) Numéro de dépôt: 21217612.7
(22) Date de dépôt: 23.12.2021
(51) Int. Cl.: H02J 3/12, H02J 3/38

(54) **PROCÉDÉS ET SYSTÈME DE RÉGULATION CONJOINTE D'UNE TENSION DANS UNE BRANCHE MOYENNE TENSION ET DANS UNE PLURALITÉ DE BRANCHES BASSE TENSION**
VERFAHREN UND SYSTEM ZUR GEMEINSAMEN REGULIERUNG EINER SPANNUNG IN EINEM MITTELSPANNUNGSZWEIG UND IN EINER VIELZAHL VON NIEDERSPANNUNGSZWEIGEN
METHODS AND SYSTEM FOR JOINTLY CONTROLLING A VOLTAGE IN A MEDIUM-VOLTAGE BRANCH AND IN A PLURALITY OF LOW-VOLTAGE BRANCHES

(30) Priorité: 24.12.2020 FR 2014110
(43) Date de publication de la demande: 29.06.2022
(73) Titulaire: Electricité de France, 75008 Paris (FR)
(72) Inventeur: ZORGATI, Riadh, 92260 FONTENAY-AUX-ROSES (FR); CROTEAU, Dominique, 78500 SARTROUVILLE (FR); LAUGERE, Andréa, 75014 PARIS (FR); MINOUX, Michel, 75013 PARIS (FR)
(74) Mandataire: Plasseraud IP

(56) Documents cités:
- EP-A1- 3 598 598
- EP-B1- 3 168 949
- FR-A1- 3 006 819

## Description

### Domaine technique

La présente divulgation relève du domaine des procédés et systèmes de régulation conjointe d'une tension dans une branche moyenne tension et dans une pluralité de branches basse tension d'un réseau de distribution d'électricité qui y sont rattachées.

### Technique antérieure

La gestion d'un réseau de distribution a pour objet de piloter de manière optimale son fonctionnement afin de minimiser les pertes, maîtriser les fluctuations de tension, et garantir ainsi une continuité de service dans des conditions économiques raisonnables. Or, la gestion du réseau électrique de distribution est amenée à évoluer profondément en raison de nombreux facteurs. Ces facteurs comprennent notamment le développement de nouveaux moyens décentralisés de production d'électricité dé-carbonée, fondée sur l'utilisation de sources d'énergies primaires renouvelables, l'évolution des usages de l'électricité, par exemple avec l'apparition des véhicules électriques, l'évolution des modes de consommation, par exemple en différant certaines consommations pour réduire la facture énergétique ou encore l'apparition de nouveaux acteurs sur le marché de l'énergie.

Les moyens de production décentralisée, ou « générateurs d'énergie dispersée GED », peuvent être gérés par des producteurs indépendants. Les moyens de production décentralisée se caractérisent par le fait qu'ils sont de puissance limitée et souvent raccordés au réseau de distribution. En se situant au plus près des points de consommation, ces moyens permettent de diminuer le coût de transport de l'énergie, les transits de puissance active au niveau du poste source et ainsi les pertes en ligne sur le réseau de transport. Toutefois, la connexion des moyens de production décentralisée sur le réseau de distribution pose de nouveaux problèmes d'exploitation, notamment la difficulté de tenir le plan de tension, c'est-à-dire les valeurs de tension dans les plages réglementaires.

De plus, les véhicules électriques sont en plein essor. La conséquence de cet essor est la connexion sur le réseau d'un grand nombre de bornes de recharge pouvant induire des sous-tensions.

Ainsi, dans le cadre de cette transition énergétique, le développement des énergies renouvelables avec leurs systèmes de stockage d'énergie et des véhicules électriques va impacter de façon significative la gestion et l'exploitation du réseau électrique de distribution, notamment dans les branches moyenne tension et dans les branches basse tension qui leur sont raccordées.

Le réseau électrique de distribution comprenant au moins une branche moyenne tension HTA et les branches basse tension BT qui lui sont rattachées est un réseau arborescent, non maillé, dont les caractéristiques des lignes, c'est-à-dire les admittances, sont connues. Ce réseau est alimenté à partir d'un réseau de transport haute tension HTB au niveau d'un transformateur HTB/HTA. Le réseau comprend plusieurs nœuds, chacun soumis à des injections et/ou des soutirages fluctuants à chaque instant. Une partie des injections provient d'une production renouvelable (solaire, éolien) tandis qu'une partie des soutirages provient de la recharge de véhicules électriques. Les systèmes de stockage de l'électricité, incluant les batteries des véhicules électriques, peuvent générer soit des injections, soit des soutirages. Or, le niveau de tension dans un réseau de distribution varie en fonction des quantités d'électricité injectées et soutirées sur ce réseau. Une injection a pour effet d'augmenter la tension alors qu'un soutirage a pour effet de la faire baisser. Afin de respecter les normes sur la qualité de tension, la tension distribuée doit être maintenue entre deux niveaux de prescription, définis contractuellement, chaque branche moyenne tension HTA et basse tension BT disposant de ses propres plages.

Le fort développement de nouveaux moyens décentralisés de production d'électricité d'origine renouvelable (éolien, photovoltaïque), va entrainer sur le réseau BT, un grand nombre d'injections d'énergie renouvelable, tandis que le déploiement d'une flotte importante de véhicules électriques va augmenter le nombre de soutirages d'énergie aux bornes de recharge, induisant ainsi des fluctuations de la tension sur le réseau dépassant les seuils légaux.

Actuellement, il est connu des procédés permettant de déterminer l'état en tension en vue de réguler la tension de branches basse tension d'un réseau de distribution, tel que décrit dans le document FR3084168. Il est également connu des procédés permettant de déterminer l'état en tension en vue de réguler la tension de branches moyenne tension d'un réseau de distribution, tel que décrit dans le document FR3006819. EP 3 168 949 B1 est un autre exemple d'art antérieur.

Toutefois, il existe un besoin de développer des procédés de régulation permettant de déterminer l'état en tension et de réguler la tension conjointement dans des branches moyenne tension et les branches basse tension qui leur sont raccordées.

### Résumé

La présente divulgation répond au moins aux problèmes exposés ci-avant.

Il est proposé un procédé de régulation conjointe d'une tension dans une branche moyenne tension et dans au moins une, et de préférence dans une pluralité, de branches basse tension d'un réseau de distribution, le réseau de distribution comprenant une pluralité de générateurs d'énergies, chaque branche basse tension étant rattachée à la branche moyenne tension en un nœud de rattachement au niveau d'un transformateur, chaque branche basse tension comprenant en outre un nœud de référence, une pluralité de nœuds commandables et une pluralité de nœuds non-commandables, la branche moyenne tension étant alimentée par une branche haute tension rattachée à la branche moyenne tension en un nœud de rattachement au niveau d'un transformateur avec régleurs en charges, la branche moyenne tension comprenant en outre un nœud de référence, une pluralité de nœuds commandables et une pluralité de nœuds non-commandables, chaque nœud des branches moyenne tension et basse tension étant soumis à des soutirages et/ou injections d'énergie, le procédé comprenant :
- une définition
   °d'une tension cible à respecter en chaque nœud de chaque branche basse tension ,
   °d'une première plage de sécurité encadrant la tension cible de chaque branche basse tension ;
   °d'une tension cible à respecter en chaque nœud de la branche moyenne tension,
   ° d'une deuxième plage de sécurité encadrant la tension cible de la branche moyenne tension ;
et le procédé comprenant, à chaque pas d'un temps prédéterminé :
- une détermination :
   °d'un état en tension effectif de la branche moyenne tension pour obtenir des tensions effectives en chaque nœud de la branche moyenne tension,
   °d'un état en tension effectif pour de chaque branche basse tension pour obtenir des tensions effectives en chaque nœud de chaque branche basse tension,
- une comparaison :
   °des tensions effectives de chaque branche basse tension avec la première plage de sécurité
   ° des tensions effectives de la branche moyenne tension avec la deuxième plage de sécurité ;
- si au moins une tension effective de la branche basse tension et/ou de la branche moyenne tension est en en-dehors respectivement de la première plage de sécurité et/ou de la deuxième plage de sécurité :
   °régulation conjointe des branches moyenne et basse tension par une mise en œuvre d'au moins un mode de régulation choisi parmi un premier, un deuxième et un troisième mode de régulation sur ladite branche moyenne tension et lesdites branches basse tension, la mise en œuvre dudit au moins un mode de régulation étant précédée par une phase d'initialisation comprenant :
      ° une agrégation de chaque branche basse tension en son nœud de rattachement respectif à la branche moyenne tension.

Selon un autre aspect, il est proposé un programme informatique comportant des instructions pour la mise en œuvre du procédé selon la présente divulgation lorsque ce programme est exécuté par un processeur.

Selon une réalisation, les générateurs d'énergies sont des générateurs d'énergies renouvelables.

Selon une réalisation, le réseau de distribution peut en outre comprendre une pluralité de bornes de soutirage d'énergie telles que des bornes de recharges de véhicules électriques.

Le réseau de distribution peut en outre comprendre une pluralité de systèmes de stockage pouvant injecter ou soutirer de l'énergie dans le réseau de distribution.

Selon l'invention, le premier mode de régulation comprend un réglage d'un rapport du transformateur HTB/HTA ou HTA/BT et un ajustement des puissances actives et réactives aux nœuds commandables de la branche moyenne et/ou des branches basse tension ; le deuxième mode de régulation comprend un ajustement des puissances actives et réactives aux nœuds commandables de la branche moyenne et/ou des branches basse tension ; le troisième mode de régulation comprend un ajustement des puissances réactives aux nœuds commandables de la branche moyenne et/ou des branches basse tension.

Selon une réalisation, la mise en œuvre d'un mode de régulation choisi parmi les premier, deuxième et troisième modes de régulation est précédée par :
- une détermination de commandes de régulation pour le premier mode de régulation pour chaque branche basse tension
- puis, une détermination de commandes de régulation pour le premier mode de régulation pour la branche moyenne tension,
- puis, une détermination de commandes de régulation pour le deuxième mode de régulation pour la branche moyenne tension à partir au moins des commandes de régulation déterminées pour le premier mode de régulation pour la branche moyenne tension,
- puis, une détermination des commandes de régulation pour le troisième mode de régulation pour la branche moyenne tension à partir au moins des commandes de régulation déterminées pour le premier et/ou le deuxième mode de régulation pour la branche moyenne tension,
   dans lequel une première, une deuxième et une troisième valeurs d'une tension au nœud de rattachement de chaque branche basse tension à la branche moyenne tension sont respectivement obtenues suite à la détermination des commandes de régulation pour le premier, deuxième et troisième modes de régulation pour la branche moyenne tension
- puis, pour chaque branche basse tension, successivement, des déterminations des commandes de régulation pour le deuxième mode de régulation en fonction de la première, de la deuxième et de la troisième valeur de la tension au nœud de rattachement de chaque branche basse tension avec la branche moyenne tension,
- puis, pour chaque branche basse tension, successivement, des déterminations des commandes de régulation pour le troisième mode de régulation en fonction de la première, de la deuxième et de la troisième valeur de la tension au nœud de rattachement de chaque branche basse tension avec la branche moyenne tension.

Selon une réalisation, la détermination des commandes de régulation pour les premier, deuxième et troisième modes de régulation pour la branche moyenne tension, puis, la détermination des commandes de régulation pour les deuxième et troisième modes de régulation pour la branche basse tension en fonction des trois valeurs de la tension au nœud de rattachement de chaque branche basse tension avec la branche moyenne tension ,
sont mises en œuvre itérativement, jusqu'à ce que les commandes optimales déterminées satisfassent un critère d'arrêt prédéfini, et dans lequel
l'agrégation de chaque branche basse tension en son nœud de rattachement respectif à la branche moyenne tension est effectuée à chaque nouvelle itération, en fonction des commandes de régulation obtenues à une itération précédente.

Selon une réalisation, le mode de régulation à mettre en œuvre parmi les premier, deuxième et troisième modes de régulation est choisi en fonction d'un coefficient reflétant une facilité de mise en œuvre de chaque mode de régulation, un coefficient différent étant associé à chaque mode de régulation et à chaque type de réseau.

Selon une réalisation, le mode de régulation à mettre en œuvre parmi les trois modes de régulation est choisi en fonction d'une valeur optimisée d'un écart à la tension cible des branches basse tension et moyenne tension, ladite valeur optimisée étant obtenue durant des calculs des commandes de régulation pour le premier, le deuxième et le troisième mode de régulation.

Selon une réalisation, l'agrégation de chaque branche basse tension en son nœud de rattachement respectif à la branche moyenne tension comprend une correction de l'état en tension effectif de la branche moyenne tension au niveau de chaque nœud de rattachement de ladite branche moyenne tension avec chaque branche basse tension, par une prise en compte de l'état en tension effectif de chaque branche basse tension.

Selon l'invention, l'agrégation de chaque branche basse tension en son nœud de rattachement respectif à la branche moyenne tension comprend,
- pour chaque branche basse tension, indépendamment les unes des autres :
   °détermination d'un couple de valeurs de puissances active et réactive représentatives de l'état en tension effectif de chaque branche basse tension, le couple de valeurs de puissances active et réactive représentatifs étant déterminé à partir de valeurs de puissances actives et réactives en chaque nœud de chaque branche basse tension et d'une valeur de la tension au nœud de référence de chaque branche basse tension,
   °ajout dudit couple de valeurs de puissances active et réactive représentatives à la valeur d'une puissance injectée/soutirée au nœud de rattachement respectif de chaque branche basse tension avec la branche moyenne tension,
- correction de chaque terme diagonal d'une matrice d'admittance de la branche moyenne tension, chaque terme diagonal correspondant à un nœud de rattachement respectif de chaque branche moyenne tension avec la branche basse tension.

Selon une réalisation, l'agrégation de chaque branche basse tension en son nœud de rattachement respectif à la branche moyenne tension est effectuée après la détermination des commandes de régulation pour le premier mode de régulation pour chaque branche basse tension, et avant la détermination des commandes de régulation pour le premier mode de régulation pour la branche moyenne tension, l'état en tension effectif de chaque branche basse tension étant obtenu après la détermination des commandes de régulation pour le premier mode de régulation pour chaque branche basse tension.

Selon une réalisation, la mise en œuvre d'un mode de régulation comprend l'application de commandes de régulation optimales telles que :
- pour le premier mode de régulation, les commandes optimales de régulation comprennent une valeur optimale d'ajustement d'une tension au nœud de référence de la branche moyenne et/ou des branches basse tension et des valeurs optimales d'ajustement de puissances actives et réactives aux nœuds commandables de la branche moyenne et/ou basse tension,
- pour le deuxième mode de régulation, les commandes optimales de régulation comprennent des valeurs optimales d'ajustement de puissances actives et réactives aux nœuds commandables de de la branche moyenne et/ou des branches basse tension,
- pour le troisième mode de régulation, les commandes optimales de régulation comprennent des valeurs optimales d'ajustement de puissances réactives aux nœuds commandables de de la branche moyenne et/ou des branches basse tension.

Selon une réalisation, les commandes de régulation optimales sont choisies itérativement et en tenant compte d'interactions entre les branches moyenne et basse tension couplées sur le réseau de distribution.

### Brève description des dessins

D'autres caractéristiques, détails et avantages apparaîtront à la lecture de la description détaillée ci-après, et à l'analyse des dessins annexés, sur lesquels :
**Fig. 1**

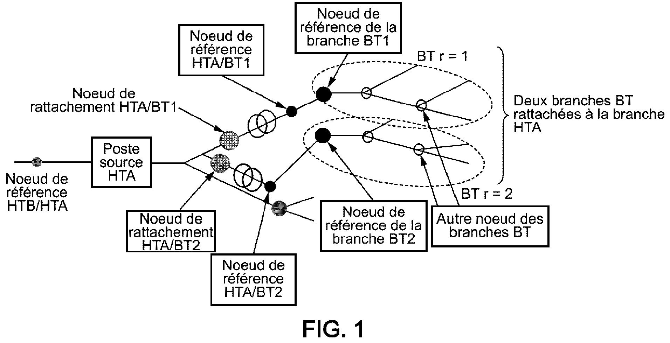

   [Fig. 1] montre un schéma simplifié d'un réseau de distribution selon une réalisation.
**Fig. 2**

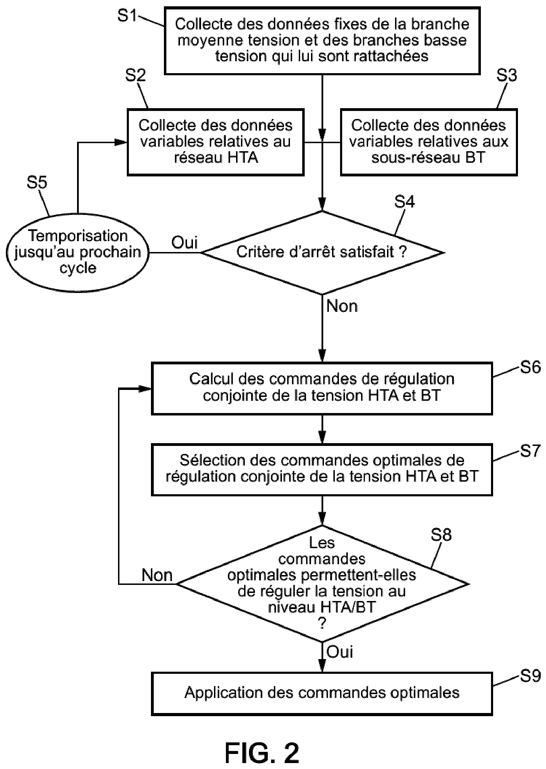

   [Fig. 2] montre des étapes d'un procédé de régulation selon une réalisation.
**Fig. 3**

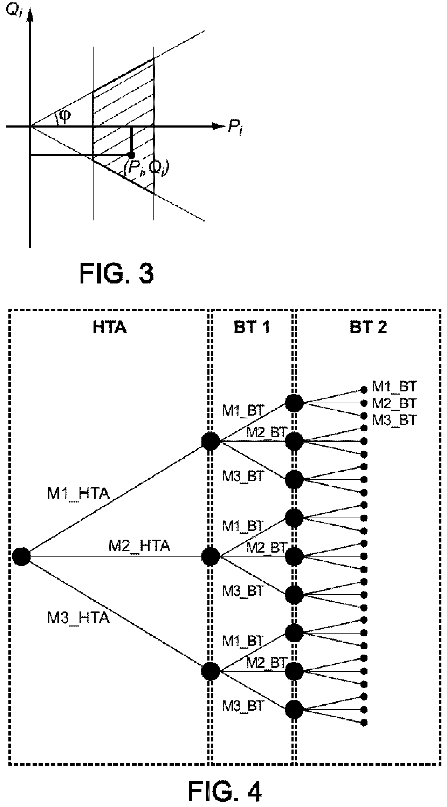

   [Fig. 3] montre un exemple de plages de variations autorisées des puissances **actives** Pi des puissances réactives Qi.
**Fig. 4**
   [Fig. 4] montre les différents modes de régulation pouvant être appliqués sur un réseau de distribution comprenant une branche moyenne tension et deux branches basse tension selon une réalisation.
**Fig. 5**

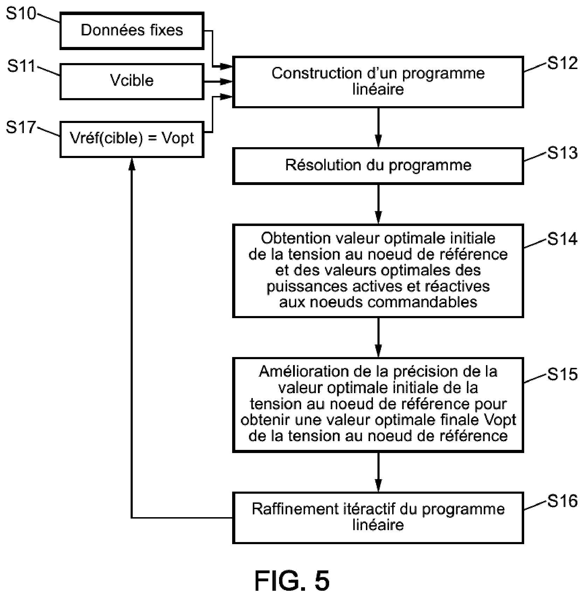

   [Fig. 5] montre les principales étapes permettant de déterminer les valeurs des commandes optimales à appliquer pour la régulation de la tension selon un mode de réalisation
**Fig. 6**

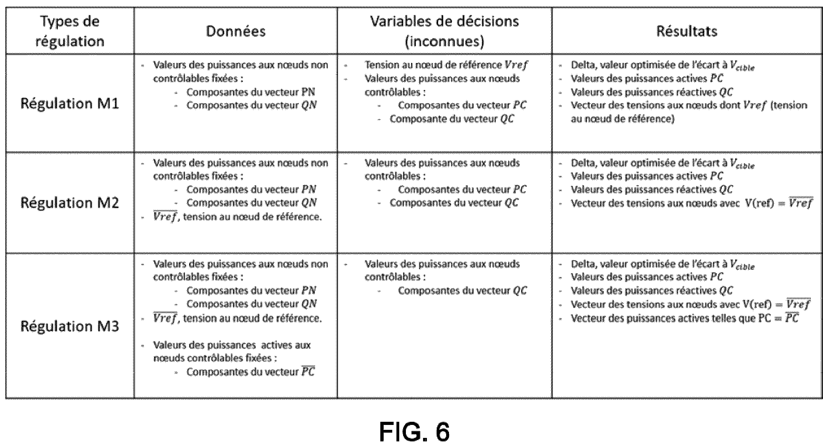

   [Fig. 6] montre un tableau présentant les différentes variables utilisées pour les calculs des commandes de régulation pour trois modes de régulation selon une réalisation.
**Fig. 7**

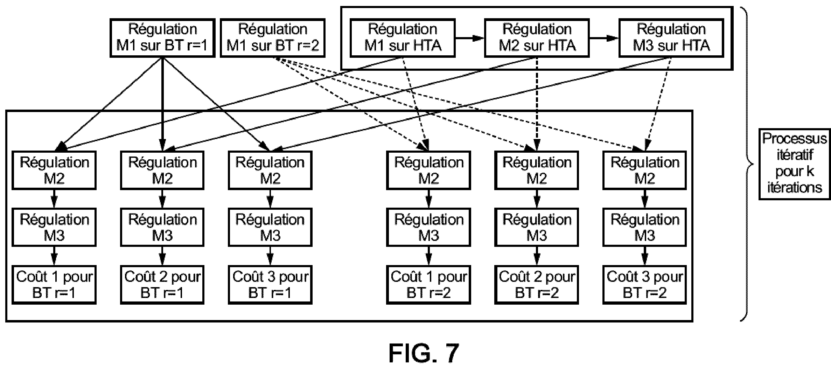

   [Fig. 7] montre un exemple de calcul des commandes de régulation pour trois modes de régulation et leur sélection selon une réalisation.
**Fig. 8**

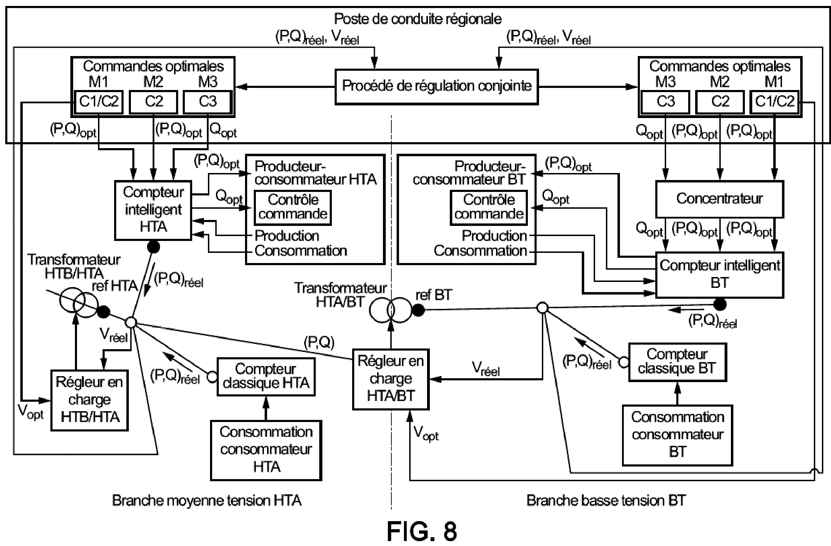

   [Fig. 8] montre un exemple d'application des commandes de régulation sur un réseau de distribution schématisé selon une réalisation.
**Fig. 9A**

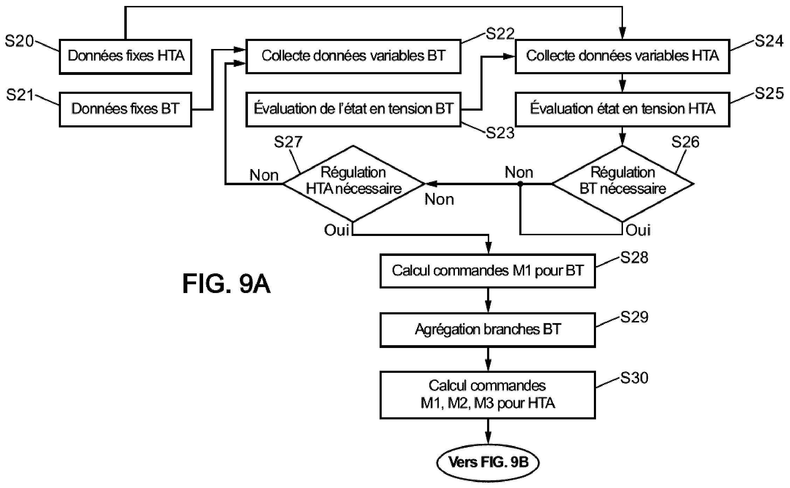

   [Fig. 9A] montre des étapes d'un procédé de régulation de la tension sur un réseau de distribution selon une réalisation.
**Fig. 9B**

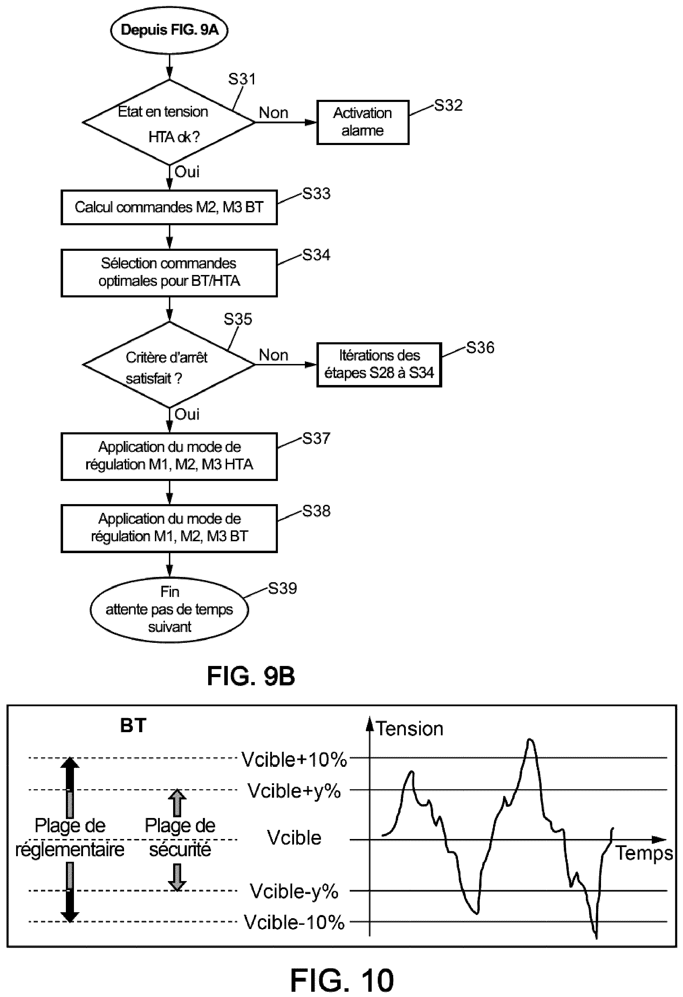

   [Fig. 9B] montre des étapes d'un procédé de régulation de la tension sur un réseau de distribution selon une réalisation.
**Fig. 10**
   [Fig. 10] montre les premières plages réglementaires et de sécurité définies pour une branche basse tension.
**Fig. 11**

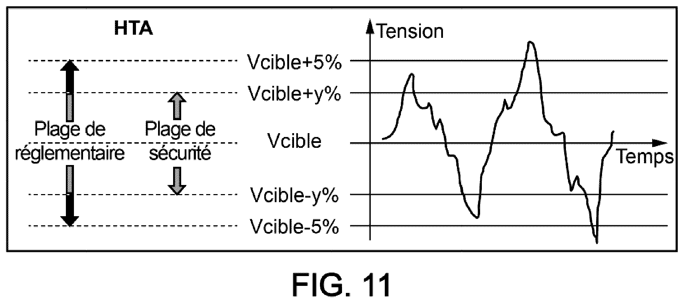

   [Fig. 11] montre les deuxièmes plages réglementaires et de sécurité définies pour une branche moyenne tension.

### Description des modes de réalisation

La figure 1 illustre un exemple de configuration d'un réseau de distribution d'électricité.

Le réseau de distribution peut comprendre une branche moyenne tension HTA, rattachée à et alimentée par une branche haute tension HTB au niveau d'un transformateur HTB/HTA pouvant comprendre des régleurs en charges. La branche moyenne tension comprend une pluralité de nœuds commandables et/ou non-commandables. La branche moyenne tension comprend en outre un nœud de référence et au moins un nœud de rattachement auquel est rattachée au moins une branche basse tension.

Dans l'exemple non limitatif de la figure 1, le réseau de distribution comprend deux branches basse tension BTr, avec r l'indice de la branche basse tension où, ici, r = 1 et r= 2. Chaque branche basse tension comprend une pluralité de nœuds commandables et/ou non-commandables ainsi qu'un nœud de référence et un nœud de rattachement à la branche moyenne tension HTA.

Tous les nœuds commandables et non-commandables sont soumis à des injections et/ou soutirages d'électricité, influant directement sur l'état en tension général du réseau de distribution mais aussi sur l'état en tension local de chaque branche basse tension et/ou moyenne tension.

La figure 2 illustre certaines des principales étapes d'un procédé de régulation conjointe dans une branche moyenne tension HTA et la pluralité de branches basse tension BT qui sont raccordées à la branche moyenne tension HTA.

Plus particulièrement, le procédé de régulation conjointe vise à maintenir la tension en chaque nœud du réseau composé d'une branche moyenne tension et de ses branches basse tension dans des plages réglementaires définies.

Typiquement, pour les branches moyenne tension HTA, la tension cible à maintenir peut être égale à 20 kV, tandis que pour les branches basse tension BT, la tension cible peut typiquement être égale à 230 V. Toutefois, ces valeurs sont données à titre informatif car d'autres valeurs de tensions cibles peuvent être définies contractuellement pour chaque utilisateur du réseau de distribution. De même, ces valeurs peuvent varier d'un pays à l'autre.

A l'étape S1, les données fixes relatives à chaque branche basse tension BT rattachée à la branche moyenne tension HTA sont collectées, ainsi que les données fixes relatives à la branche moyenne tension HTA.

Concernant la branche basse tension BT, les données fixes comprennent notamment les valeurs cibles de la tension aux nœuds de chaque branche basse tension. Ces valeurs sont réelles et positives. Ce sont les valeurs idéales des modules des tensions aux nœuds, qu'il s'agit d'atteindre par la régulation. Ces valeurs sont sous la forme d'un vecteur Vcible, de dimension égale au nombre de nœuds. Cela correspond à l'état en tension cible.

Les tensions cibles ne peuvent pas toujours être atteintes exactement. Un pourcentage de déviation à respecter peut alors être établi.

Notamment, le pourcentage de déviation ou « première plage réglementaire », peut être de l'ordre de +10% et -10% autour de la valeur de la tension cible pour les branches basse tension BT. Les valeurs de la première plage réglementaire sont données à titre d'exemple non limitatif. Ces valeurs peuvent varier d'un pays à l'autre.

Dans la suite de la description, les termes « tension cible BT » ou « vecteur de tensions cibles BT » sont utilisés indifféremment pour faire référence au vecteur de tensions cibles correspondant aux valeurs de la tension cible de chaque branche basse tension.

Les données fixes comprennent également une matrice d'admittance Y de chaque branche basse tension et le nœud de référence de chaque branche basse tension.

Les données fixes comprennent également la liste des indices des nœuds dits « commandables ». Ces nœuds commandables sont les nœuds sur lesquels la régulation peut être effectuée depuis le concentrateur du réseau de distribution BT. Ces nœuds commandables peuvent être situés au niveau d'un compteur intelligent.

Au contraire, les nœuds non commandables sont des nœuds auxquels le procédé de régulation ne peut être appliqué. Ces nœuds non commandables peuvent être situés au niveau d'un compteur électrique classique ou intelligent.

En outre, selon un mode de réalisation, les données fixes comprennent, pour chaque nœud commandable de chaque branche basse tension, un diagramme, décrit par un ensemble d'inégalités linéaires, illustrant les plages de variations autorisées des puissances actives Pi et des puissances réactives Qi en ces nœuds. Un tel exemple de diagramme est illustré sur la figure 3.

En variante, le diagramme illustrant les plages de variations autorisées des puissances actives Pi et des puissances réactives Qi aux nœuds commandables est variable dans le temps.

Enfin, la disponibilité de la commande de réglage en charge du transformateur HTA/BT auquel est rattachée la branche basse tension BT est collectée pour chaque branche basse tension BT.

Les données fixes pour la branche moyenne tension HTA comprennent notamment les valeurs cibles de la tension aux nœuds de la branche moyenne tension. Ces valeurs sont réelles et positives. Ce sont les valeurs idéales des modules des tensions aux nœuds, qu'il s'agit d'atteindre par la régulation. Ces valeurs sont sous la forme d'un vecteur, de dimension égale au nombre de nœuds.

Selon une réalisation, la tension cible est la même pour tous les nœuds dans la branche moyenne tension, typiquement 20.000 V. Toutefois, des tensions différentes peuvent être contractées en différents nœuds. Cette valeur peut également varier d'un pays à l'autre.

Les tensions cibles ne peuvent pas toujours être atteintes exactement. Un pourcentage de déviation à respecter peut alors être établi.

Notamment, le pourcentage de déviation ou « deuxième plage réglementaire », peut être de l'ordre de +5% et -5% autour de la valeur de la tension cible pour la branche moyenne tension HTA. Les valeurs de la deuxième plage réglementaire sont données à titre d'exemple non limitatif. Ces valeurs peuvent varier d'un pays à l'autre.

Dans la suite de la description, les termes « tension cible HTA » ou « vecteur de tensions cibles HTA » sont utilisés indifféremment pour faire référence au vecteur de tensions cibles correspondant à l'état en tension cible de la branche moyenne tension.

Par ailleurs, la matrice d'admittance de la branche moyenne tension HTA et le nœud de référence de la branche moyenne tension HTA sont collectés.

La liste des indices des nœuds commandables est également collectée. Ces nœuds commandables sont des nœuds sur lesquels la régulation peut être effectuée depuis le site où sont installés les matériels servant à la régulation de la branche moyenne tension HTA.

Pour chaque branche moyenne et basse tension HTA BT, les nœuds sont identifiés par des numéros. Les numérotations sont indépendantes dans les différentes branches. Ainsi, la correspondance entre l'indice de chaque nœud de référence des branches BT et l'indice du nœud de la branche HTA auquel chaque branche BT est rattachée est également collectée.

Les pertes du transformateur HTB/HTA sont également collectées. Elles peuvent être représentées par un élément série d'admittance qui peut être fourni directement.

Enfin, les domaines fixes de variation permis pour les couples de puissances active Pi et réactive Qi correspondant aux nœuds commandables de la branche moyenne tension HTA peuvent être collectés. En variante, les couples de puissances actives et réactives sont variables dans le temps et sont collectées durant les étapes S2 et S3 de collecte des données variables.

Avantageusement, les étapes S2 à S9 du procédé illustré sur la figure 1 sont mises en œuvre à chaque pas d'un temps prédéterminé. Par exemple, le pas de temps est égal à 10 minutes.

Ainsi, à l'étape S2, les données variables relatives à la branche moyenne tension HTA sont collectées.

Ainsi, outre le diagramme illustrant les plages de variations autorisées des puissances actives Pi et des puissances réactives Qi aux nœuds commandables si celui-ci est variable dans le temps, les données variables peuvent comprendre les puissances actives Pi et réactives Qi injectées en tous nœuds de la branche HTA.

A l'étape S3, pour chaque branche basse tension BT, outre le diagramme illustrant les plages de variations autorisées des puissances actives Pi et des puissances réactives Qi aux nœuds commandables si celui-ci est variable dans le temps, les données variables peuvent comprendre les puissances actives Pi et réactives Qi injectées ou soutirées en chaque nœud du réseau. Ces valeurs peuvent être transmises au concentrateur au moyen d'un compteur intelligent, par exemple en courant porteur en ligne. En parallèle, une mesure de tension peut être faite au niveau de postes de distribution par le concentrateur.

En variante, un modèle d'estimation de charge ou profil de production peut être utilisé pour déterminer les puissances actives et réactives produites.

A partir des données fixes et variables, l'état en tension du réseau est déterminé afin de déterminer si un critère d'arrêt prédéfini est vérifié à l'étape S4.

Plus précisément, l'état en tension de chaque branche basse tension et l'état en tension de la branche moyenne tension sont déterminés. Cette étape est décrite plus en détail en référence à la figure 5. Typiquement, l'état en tension de chaque branche basse tension et l'état en tension de la branche moyenne tension sont déterminés selon toute technique de résolution du système d'équations de Kirchhoff, autrement dit le problème du calcul de la répartition des charges, communément appelé problème du « load flow » permettant de déterminer en tout nœud du réseau la tension en connaissant les puissances injectées/soutirées en chacun des nœuds du réseau.

La détermination de l'état en tension de chaque branche basse tension BT permet d'obtenir un vecteur de tensions dites « effectives », illustrant l'état en tension effectif de chaque nœud de chaque branche basse tension. Par « tension effective », on entend la partie réelle de la tension complexe déterminée à un instant t dans un nœud d'une branche basse tension. Il s'agit donc d'un état réel de la tension en ce nœud et à cet instant t. Cet état réel en tension dans chaque branche basse tension est noté ci-après et dans les références aux dessins « Vréel BT ».

Dans la suite de la description, les termes « tension effective BT » ou « vecteur de tensions effectives BT » sont utilisés indifféremment pour faire référence au vecteur de tensions effectives correspondant à l'état réel en tension de chaque branche basse tension, précité (Vréel BT).

De même, la détermination de l'état en tension de la branche moyenne tension HTA permet d'obtenir un vecteur de tensions dites « effectives », illustrant l'état en tension effectif de chaque nœud de la branche moyenne tension. Par « tension effective », on entend la partie réelle de la tension complexe déterminée à un instant t dans un nœud de la branche moyenne tension. Il s'agit donc d'un état réel de la tension en ce nœud et à cet instant t. Cet état réel en tension dans la branche moyenne tension est noté ci-après et dans les références aux dessins « Vréel HTA ».

Dans la suite de la description, les termes « tension effective HTA » ou « vecteur de tensions effectives HTA » sont utilisés indifféremment pour faire référence au vecteur de tensions effectives correspondant à l'état réel en tension de la branche moyenne tension, précité (Vréel HTA).

A l'étape S4, il est donc vérifié si une régulation de la tension est nécessaire.

Pour cela, il est déterminé si l'état en tension effectif Vréel BT est bien compris dans une première plage sécurité définie..

Typiquement, la première plage de sécurité peut être comprise entre ±5% et ±10% autour de la tension cible BT, et de préférence peut être de l'ordre de ±8% autour de la tension cible BT. Cette première plage de sécurité est choisie pour être plus restreinte que la première plage réglementaire de ±10% présentée ci-avant pour la branche basse tension. Cela permet une plus grande sécurité sur le réseau puisque le procédé de régulation est déclenché avant que la tension dans la branche basse tension BT ne soit en-dehors de la première plage réglementaire, permettant ainsi d'anticiper les situations de sur ou de sous-tensions pouvant être plus délicates à traiter.

Pour déterminer si l'état en tension effectif Vréel BT est bien compris dans la première plage de sécurité définie, les écarts entre la tension effective et la tension cible sont déterminés. Les écarts entre la tension effective et la tension cible sont les écarts en valeur absolue entre la tension cible Vcible et le module de la tension effective.

La figure 10 illustre les plages réglementaires et de sécurité pour les branches basse tension BT.

De même pour la branche moyenne tension, il est déterminé si l'état en tension effectif Vréel HTA est bien compris dans une deuxième plage de sécurité définie.

Typiquement, la deuxième plage de sécurité peut être comprise entre ±1% et ±5% autour de la tension cible HTA, et de préférence peut être de l'ordre de ±3% autour de la tension cible HTA. Cette deuxième plage de sécurité est choisie pour être plus restreinte que la deuxième plage réglementaire de ±5% présentée ci-avant pour la branche moyenne tension. Cela permet une plus grande sécurité sur le réseau puisque le procédé de régulation est déclenché avant que la tension dans la branche moyenne tension HTA ne soit en-dehors de la deuxième plage réglementaire, permettant ainsi d'anticiper les situations de sur ou de sous-tensions pouvant être plus délicates à traiter.

La figure 11 illustre les plages réglementaires et de sécurité pour les branches basse tension HTA.

Si l'état en tension de chaque branche est compris dans les première ou deuxième plages de sécurité définies respectivement pour les branches basse ou moyenne tension, une régulation n'est pas nécessaire et le procédé attend le pas de temps suivant à l'étape S5 et met en œuvre l'étape S2 une nouvelle fois.

Si l'état en tension d'au moins une branche basse tension BT et/ou de la branche moyenne tension HTA est en dehors, respectivement, de la première ou de la deuxième plage de sécurité, une régulation doit être mise en œuvre.

A l'étape S6, les commandes de régulation conjointe de la tension pour la branche moyenne tension HTA et les branches basse tension BT sont calculées. Plus précisément, trois modes de régulation peuvent être appliqués lors de la mise en œuvre du procédé de régulation.

En outre, trois commandes de régulation peuvent être définies. La première commande de régulation C1 comprend le réglage en charge du transformateur HTB/HTA si cette commande est applicable à la branche moyenne tension HTA, ou le réglage en charge du transformateur HTA/BT si cette commande est applicable à la branche basse tension BT. Pour obtenir la première commande de régulation C1, la valeur optimale d'ajustement de la tension au nœud de référence de la branche moyenne tension HTA et/ou de chaque branche basse tension BT est calculée. La première commande de régulation C1 comprend également le réglage en charge du transformateur HTB/HTA et/ou HTA/BT lorsque ce réglage est disponible sur les transformateurs HTA/BT.

Un premier coefficient de facilité de mise en œuvre est associé à la première commande de régulation C1. Notamment, un premier coefficient différent peut être associé pour la branche moyenne tension mais également pour chaque branche basse tension, en prenant notamment en compte la disponibilité du réglage en charge pour la branche basse tension concernée.

La deuxième commande de régulation C2 comprend l'ajustement des valeurs de puissances actives et réactives en chaque nœud commandable des branches moyenne et basse tension. Ainsi, pour déterminer la deuxième commande de régulation C2, des valeurs optimales d'ajustement des puissances actives et réactives aux nœuds commandables pour la branche moyenne tension HTA et pour chacune des branches basse tension BT sont calculées. Ces valeurs optimales peuvent être calculées au moyen d'une technique de programmation linéaire. Cela est possible si l'on ne tient pas compte des interactions entre les réseaux. Les valeurs de puissances actives et réactives en chaque nœud commandable des branches moyenne et basse tension peuvent être ajustées au moyen d'une boîte de contrôle-commande via le compteur intelligent connecté au nœud commandable concerné.

Un deuxième coefficient de facilité de mise en œuvre est en outre associé à la deuxième commande de régulation C2. Notamment, un deuxième coefficient différent peut être associé pour la branche moyenne tension mais également pour chaque branche basse tension.

La troisième commande de régulation C3 comprend l'ajustement des valeurs des puissances réactives aux nœuds commandables des branches moyenne et/ou basse tension. La troisième commande de régulation C3 peut être obtenue par le calcul des valeurs des puissances réactives aux nœuds commandables pour la branche moyenne tension HTA et pour chacune des branches basse tension BT. Ces valeurs peuvent être calculées au moyen d'une technique de programmation linéaire si l'on ne tient pas compte des interactions entre les réseaux.

Les valeurs des puissances réactives aux nœuds commandables des branches moyenne et/ou basse tension peuvent être ajustées au moyen d'une boîte de contrôle-commande via le compteur intelligent connecté au nœud commandable concerné.

Un troisième coefficient de facilité de mise en œuvre est en outre associé à la troisième commande de régulation C3. Notamment, un troisième coefficient différent peut être associé pour la branche moyenne tension mais également pour chaque branche basse tension.

Il est à noter que pour chacune des commandes de régulation, des valeurs différentes d'ajustement peuvent être déterminées pour chaque branche basse tension ainsi que pour la branche moyenne tension.

Par ailleurs, dans une réalisation, les valeurs des coefficients de facilité de mise en œuvre associés à chaque commande de régulation peuvent différer selon que la branche concernée est la branche moyenne tension ou une branche basse tension.

Dans une réalisation, les coefficients de facilité de mise en œuvre (ou simplement « coefficients » dans la suite de la description) sont prédéfinis afin de fixer une hiérarchie préférée dans l'ordre d'application des trois commandes de régulation. Ainsi, les coefficients peuvent prendre toute valeur, une condition étant de fixer ces valeurs de sorte que la hiérarchie souhaitée soit conservée.

Notamment, dans un mode de réalisation, les commandes de régulation sont hiérarchisées comme suit, dans l'ordre de préférence d'application de ces commandes de régulation : première commande de régulation C1 pour la branche moyenne tension, première commande de régulation C1 pour les branches basse tension pour lesquelles le réglage en charge est disponible, sinon troisième commande de régulation C3 pour les branches basse tension, puis deuxième commande de régulation C2 pour les branches basse tension, puis troisième commande de régulation C3 pour la branche moyenne tension, puis deuxième commande de régulation C2 pour la branche moyenne tension.

Ainsi, l'ordre d'application des trois commandes de régulation est régi à cette hiérarchie de préférence d'application. Les coefficients associés à ces commandes de régulation définissent en outre mieux cette hiérarchie.

Ainsi, à titre d'exemple indicatif et non limitatif, les coefficients suivants peuvent être associés à chacune des trois commandes de régulation, selon qu'elles s'appliquent à une branche basse tension BT ou moyenne tension HTA.

Pour la première commande de régulation C1, le premier coefficient associé pour la branche basse tension peut être 50 et pour la branche moyenne tension 10.

Pour la deuxième commande de régulation C2, le deuxième coefficient associé pour la branche basse tension peut être 80 et pour la branche moyenne tension 100.

Pour la troisième commande de régulation C3, le troisième coefficient associé pour la branche basse tension peut être 70 et pour la branche moyenne tension 85.

Puis, à l'étape S7 les commandes optimales de régulation à appliquer son sélectionnées. Notamment les commandes optimales de régulation peuvent être sélectionnées au moins en partie en fonction du coefficient qui leur est associé. Notamment, plus le coefficient est faible, plus les commandes optimales sont faciles à être appliquées.

Dans un mode de réalisation alternatif, aucun coefficient n'est associé aux commandes de régulation.

A l'étape S8, il est déterminé si les commandes optimales de régulation permettent de réguler les tensions des branches moyenne et basse tension du réseau. Si ce n'est pas le cas, le procédé peut reprendre à l'étape S6 de calcul des commandes de régulation de manière itérative.

Plus précisément, pour déterminer si les commandes optimales de régulation permettent de réguler les tensions des branches moyenne et basse tension du réseau, il est déterminé si la tension en chaque nœud des branches basse tension BT est comprise dans la première plage réglementaire et si la tension en chaque nœud de la branche moyenne tension HTA est comprise dans la deuxième plage réglementaire.

Cette phase itérative, décrite plus en détails ci-après, permet notamment d'obtenir des valeurs de commandes optimales plus précises, permettant ainsi une meilleure régulation de la tension.

Si c'est le cas, les commandes optimales sont effectivement mises en œuvre à l'étape S9.

Notamment, pour chaque branche basse tension BT, les commandes optimales associées à un mode de régulation parmi trois modes de régulation sont mises en œuvre.

Notamment pour le premier mode de régulation M1, les premières et deuxièmes commandes de régulation C1, C2 sont appliquées. Pour le deuxième mode de régulation M2, les deuxièmes commandes de régulation C2 sont appliquées. Pour le troisième mode de régulation M3, les troisièmes commandes de régulation C3 sont appliquées.

Pour chaque branche basse tension BT, un mode de régulation différent peut être appliqué. De même, un mode de régulation différent de ceux appliqués aux branches basse tension peut être appliqué pour la branche moyenne tension HTA.

En se basant sur l'exemple de la figure 1, la figure 4 illustre toutes les possibilités de régulation pour ce réseau particulier. Le réseau de distribution comprenant une branche moyenne tension HTA, sur laquelle trois modes de régulation M1, M2, M3 peuvent être appliqués, et deux branches basse tension BT, sur chacune desquelles les trois modes de régulation M1, M2, M3 peuvent être appliqués, le nombre de régulation pouvant être appliqué est égal à 3^{r+1}, avec r le nombre de branches basse tension raccordées à la branche moyenne tension. Ainsi, pour le réseau illustré sur la figure 1, il existe 27 possibilités de régulation.

La figure 5 illustre de manière plus précise des étapes permettant d'obtenir les commandes optimales à appliquer selon l'un des trois modes de régulation pour une branche basse tension BT.

Plus précisément, le calcul des commandes optimales de régulation de la tension comprend la résolution du problème d'optimisation P1 dans lequel Vref correspond à la valeur de la tension au nœud de référence.$\left\{\begin{matrix}{min}_{x , y} z \\ sous les contraintes : \\ - z \leq \left|V\left(k\right)\right| - Vcible \left(k\right) \leq z ∀ k ∈ N , \\ V solution du système de Kirchhoff , fonction implicite de Vref et \left({P}_{i}{, Q}_{i}\right) \\ i ∈ IC \left(liste des indices des noeuds commandables\right)\end{matrix}\right.$

Dans la formulation ci-dessus, N désigne l'ensemble des indices 1, 2, ..., n des nœuds du réseau. La solution optimale du problème (P1) dépend, implicitement, des valeurs des charges ou des productions correspondant aux différents éléments non commandables (lesquels sont des données externes du modèle d'optimisation, et sont connues). Cela correspond aux étapes S10 et S11 de la figure 5.

Le problème d'optimisation obtenu (P1) est non linéaire. Cependant, en introduisant une approximation linéaire de la dépendance de la tension V par rapport aux puissances actives P et réactives Q, le calcul des commandes optimales de régulation de la tension peut se formuler comme la solution d'un programme linéaire de forme :
$\left\{\begin{matrix}{min z}_{x , z} \\ sous les contraintes \\ Ax \leq b\end{matrix}\right. :$

où z désigne la fonction-objectif z, une variable inconnue qui représente la valeur d'écart en tension entre la tension effective aux nœuds et la tension cible qu'il s'agit de minimiser dans chaque branche du réseau ;
x désigne le vecteur inconnu des commandes de régulation qu'il s'agit de déterminer : pour le premier mode de régulation M1, les inconnues sont la valeur de la tension au nœud de référence, les puissances actives et réactives aux nœuds commandables,
pour le deuxième mode de régulation M2, les inconnues sont les puissances actives et réactives aux nœuds commandables (la valeur de la tension au nœud de référence est fixée),
pour le troisième mode de régulation M3, les inconnues sont les puissances réactives aux nœuds commandables (la valeur de la tension au nœud de référence est fixée, les valeurs des puissances actives aux nœuds commandables sont également fixées),
Ax ≤ b représente l'ensemble des contraintes à respecter, comprenant des équations de Kirchhoff linéarisées d'une part, et des inégalités définissant les domaines de variations possibles des puissances actives et réactives aux nœuds commandables d'autre part. La résolution d'un programme linéaire fait appel à des algorithmes connus et efficaces.

Cela correspond à l'étape S12.

La présentation proposée suppose que les variables de décision par rapport auxquelles l'optimisation est réalisée incluent les trois commandes de régulation. Les cas où seulement un sous-ensemble de ces commandes est activable, notamment lorsque la première commande de régulation n'est pas disponible pour une branche basse tension, relèvent du même modèle. Les valeurs des variables correspondant aux commandes de régulation non applicables sont fixées et prises en compte par rapport aux autres variables inconnues.

La recherche des commandes de régulation peut comprendre la définition d'une fonction-objectif visant à garantir le respect des tensions en chaque nœud des branches basse tension dans la première plage de sécurité définie. Les variables inconnues à ce stade, représentant les commandes de régulation, peuvent être soumises à des contraintes, notamment le respect de la physique régissant le réseau de distribution, modélisée par les équations de Kirchhoff, ainsi que les domaines de variation des puissances actives Pi et réactives Qi aux nœuds commandables des branches basse tension.

Selon une réalisation, la fonction-objectif à minimiser qui permet de résoudre le problème du « load flow » défini ci-avant peut s'écrire $z = {Max}_{i = 1 , … n} \left\{\left|real\left(V\left(i\right)\right)-Vcible\left(i\right)\right|\right\}$ (1)

Où real(V(i)) est la partie imaginaire de la tension au nœud i.

Les variables considérées pour contrôler la tension en chaque nœud des branches basse tension sont :
z, correspondant à la valeur de la fonction-objectif pour laquelle fonction-objectif tous les coefficients sont nuls excepté celui correspondant à z, qui est égal à 1 ;
Vref, correspondant à la partie réelle de la tension au nœud de référence de la branche considérée,
toutes les valeurs des puissances actives P(i) et réactives Q(i) en chaque nœud commandable, qui sont au nombre de deux fois le nombre de nœuds commandables. A titre d'exemple, en notant nbctrl le nombre de nœuds commandables, pour tout k=1, 2, ...
nbctrl, la variable numéro 2+k correspond à P(iₖ), la puissance active au nœud iₖ et la variable numéro 2+nbctrl+k correspond à Q(iₖ), la puissance réactive au nœud iₖ.

Il est à noter que dans le cadre du calcul des commandes optimales de régulation, dans le cas des premières commandes de régulation, les variables Vref, P(i) et Q(i) sont inconnues. Pour les deuxièmes commandes de régulation, la valeur de Vref est fixée à la dernière valeur antérieure déterminée au pas de temps précédent, P(i) et Q(i) sont inconnues. Pour les troisièmes commandes de régulation, la valeur de Vref est fixée à la dernière valeur antérieure et les valeurs des P(i) sont également fixées. Les valeurs des Q(i) sont inconnues.

Les contraintes que doivent respecter les domaines de variation des puissances actives et réactives Pi, Qi de chaque nœud commandable i sont décrites par le couple (P(iₖ), Q(iₖ)) telle que : αᵣ P(iₖ) + βᵣ Q(iₖ) ≤ γᵣ et donnent une matrice Cₖ contenant trois coefficients dans chaque ligne correspondant à une contrainte devant être satisfaite.

Concernant les contraintes relatives aux équations de Kirchhoff, une approximation linéaire de la relation entre les tensions et les puissances injectées est réalisée. Dans un mode de réalisation, les équations de Kirchhoff peuvent s'écrire comme suit.$\left|\begin{matrix}{S}_{1} ∗ \\ SS ∗\end{matrix}\right| ⋅ = ⋅ \left|\begin{matrix}Vref & 0 \\ 0 & diag \left(VV∗\right)\end{matrix}\right| x ⋅ \left|\begin{matrix}{Y}_{1 , 1} & {Y}_{1 , L} \\ {Y}_{L , 1} & YY\end{matrix}\right| ⋅ x ⋅ \left|\begin{matrix}Vref \\ VV\end{matrix}\right|$

Avec le nœud de référence 1, Y la matrice d'admittance, YY la sous-matrice obtenue en supprimant les premières ligne et colonne de Y, Vref la tension au nœud de référence et VV le vecteur complexe des tensions aux nœuds autres que le nœud de référence 1, S₁ la puissance complexe injectée au nœud de référence et SS le vecteur de puissances complexes aux nœuds autres que le nœud de référence 1. Le signe « * » désigne la conjugaison complexe ou la conjugaison composante par composante pour un vecteur.

Par une approximation linéaire des équations de Kirchhoff, possible du fait que dans le cadre du procédé de régulation de la tension décrit, le vecteur des tensions VV est au voisinage proche du vecteur de tensions cibles VVcible, la relation suivante est obtenue : $Real \left(VV\right) = Vref \times real \left(w\right) + MR \times real \left(SS\right) + MI \times imag \left(SS\right)$ (2)

Où real(w) est la partie réelle du produit matriciel -YY⁻¹ xY_{L,1}, Real(VV) est la partie réelle du vecteur de tensions aux nœuds autres que le nœud de référence 1, real(SS) la partie réelle du vecteur de puissances complexes aux nœuds autres que le nœud de référence 1, imag(SS) la partie imaginaire du vecteur de puissances complexes aux nœuds autres que le nœud de référence 1, MI la partie imaginaire de M où M = YY⁻¹. (diag(VVcible*))⁻¹, et MR la partie réelle de M.

A partir de la relation (2), le programme linéaire (1) peut s'écrire sous la forme
$\left\{\begin{matrix}{min}_{x} z \\ sous les contraintes \\ z . 1 + Σi ∈ IC \left(MR\left(:,i\right)P\left(i\right)+MI\left(:,i\right)Q\left(i\right)\right) \leq h \\ z . 1 - Σi ∈ IC \left(MR\left(:,i\right)P\left(i\right)+MI\left(:,i\right)Q\left(i\right)\right) \leq - h \\ z + Vref \leq Vcible \left(ref\right) \\ z - Vref \leq - Vcible \left(ref\right) \\ \left(P\left(i\right),Q\left(i\right)\right) ∈ Fi , i = 1 , … , n \\ i ∈ IC \left(liste des indices des noeuds commandables\right) \\ Fi : domaine de variation des \left(P\left(i\right),Q\left(i\right)\right) .\end{matrix}\right.$

Les domaines Fi sont définis par les matrices Ci qui sont données, et avec 1 le vecteur de dimension n-1 ayant toutes ses composantes égales à 1, et Vcible(ref) la tension cible au nœud de référence, et h le vecteur des tensions cibles VVcible duquel ont été retirées les nœuds non-commandables qui n'agissent pas sur la résolution du programme linéaire.

Le programme linéaire ainsi formulé est résolu à l'étape S13. Ce programme linéaire peut être résolu par tout moyen informatique connu (solveur de programme linéaire). En sortie, les puissances actives P(i) et réactives Q(i) à injecter aux différents nœuds contrôlables du réseau sont obtenues, ainsi que la tension au nœud de référence.

Les puissances actives P(i) et réactives Q(i) ainsi obtenues sont utilisées ensemble comme deuxièmes commandes optimales de régulation. Pour les troisièmes commandes optimales de régulation, seules les puissances réactives Q(i) ainsi obtenues sont utilisées.

Cela correspond à l'étape S14.

La tension au nœud de référence peut toutefois être améliorée à l'étape S15. Plus précisément, l'étape S15 vise à augmenter la précision de cette première valeur optimisée.

En effet, la première valeur optimisée est obtenue suite à une linéarisation du système d'équations de Kirchhoff. Ainsi, la valeur obtenue par rapport à l'état en tension effectif du réseau, c'est-à-dire qui résulterait de la résolution exacte du système d'équations de Kirchhoff pour le vecteur S des puissances injectées aux différents nœuds du réseau, où, pour chaque nœud contrôlable i, la partie réelle (S(i)) et la partie imaginaire (S(i)) sont les valeurs prises par les variables de décision correspondant au nœud i à l'optimum du programme linéaire.

Or, la précision des valeurs de tension au nœud de référence Vref et de l'écart à la tension cible au nœud de référence Vcible peut être sensiblement améliorée par la détermination de l'état en tension minimisant l'écart à la tension cible au nœud de référence Vcible à partir des valeurs optimales des puissances injectées aux nœuds contrôlables. Pour cela, un calcul supplémentaire est effectué immédiatement après la résolution du programme linéaire.

Dans un premier temps, une recherche dichotomique sur la tension au nœud de référence peut être effectuée en utilisant une approximation linéaire des variations de l'état en tension (la solution du système de Kirchhoff) en fonction de la tension au nœud de référence, et à partir de la connaissance de deux solutions données de Kirchhoff, Vsol1 et Vsol2. Ces solutions correspondent à des valeurs choisies, encadrant la valeur de la tension cible au nœud de référence Vcible(ref). Ainsi, par exemple, les deux solutions peuvent être comprises entre 0.9xVcible(ref) et 1.1xVcible(ref), Vsol1 étant inférieure à la valeur de la tension cible au nœud de référence, et Vsol2 étant supérieure à la valeur de la tension cible au nœud de référence. De préférence, les solutions Vsol1 et Vsol2 correspondent respectivement aux valeurs 0.95xVcible(ref) et 1.05xVcible(ref) de la tension cible au nœud de référence. Le résultat de cette première étape conduit à identifier un encadrement de la valeur optimale finale inconnue de la tension au nœud de référence entre deux valeurs notées Vref1 bis et Vref2bis.

Puis, le système d'équations de Kirchhoff est résolu pour chacune des deux valeurs Vref1bis et Vref2bis. Cela permet de déterminer deux nouvelles solutions Vsol1' et Vsol2'. Avec ces deux nouvelles solutions, la première étape est de nouveau mise en œuvre.

Cela permet d'obtenir une précision élevée sur l'état en tension. Typiquement, la précision est de l'ordre de 10⁻¹⁰ au minimum. Par ailleurs, seules quatre résolutions du système d'équations de Kirchhoff sont nécessaires pour obtenir ce degré de précision. Cette étape est donc peu coûteuse en ressources et en temps de calcul, tout en permettant un très haut degré de précision.

A l'étape S16, la précision de la tension optimale au nœud de référence peut encore être améliorée. Pour cela, la valeur de la tension obtenue en sortie de l'étape S15 est utilisée comme point de linéarisation du programme linéaire. De fait, cette valeur est injectée dans l'étape de construction du programme linéaire (S17).

Ainsi, les étapes S10 à S17 peuvent être mises en œuvre de manière itérative, jusqu'à convergence de la solution. Le nombre d'itérations est compris entre 1 et 15, et de préférence entre 1 et 5, et de préférence entre 2 et 4. En sortie, une valeur optimale finale de la tension au nœud de référence est obtenue.

Cette valeur optimale de la tension au nœud de référence fait notamment partie des premières commandes optimales de régulation.

Les étapes décrites en référence à la figure 5 sont axées sur la résolution du programme linéaire permettant d'obtenir les commandes optimales pour les branches basse tension.

Concernant la branche moyenne tension, les commandes optimales peuvent être obtenues par résolution du même programme linéaire.

Toutefois, la résolution du programme linéaire est précédée par une phase d'initialisation lors de laquelle chaque branche basse tension BT rattachées à la branche moyenne tension HTA sont agrégées en leur nœud de rattachement respectif, de sorte que le procédé décrit en référence à la figure 5 qui permet d'obtenir les commandes optimales de régulation peut être directement appliqué à la branche moyenne tension.

Plus précisément, la phase d'initialisation comprend le calcul d'un couple de valeurs de puissances actives et réactives dites « équivalentes » pour chaque branche basse tension BT rattachée à la branche moyenne tension HTA. Les valeurs des puissances actives et réactives équivalentes calculées sont ensuite ajoutées à la valeur de la puissance injectée/soutirée au nœud de rattachement respectif de chaque branche basse tension BT à la branche moyenne tension HTA.

Par ailleurs, la phase d'initialisation comprend en outre la correction de chaque terme diagonal de la matrice d'admittance de la branche moyenne tension HTA, correspondant au nœud de rattachement respectif de chaque branche basse tension BT.

Considérant un réseau de distribution comprenant une branche moyenne tension HTA à laquelle est rattachée une branche basse tension BT, le réseau de distribution peut être décrit par :
la matrice d'admittance *Yₐ* de la branche moyenne tension HTA avec le nœud d'indice *ref* comme nœud de référence ;
la matrice d'admittance *Y_{b}* de la branche basse tension BT avec le nœud d'indice 1 comme nœud de référence (cet indice est donné à titre indicatif) ;
le nœud de rattachement ente la branche basse tension et moyenne tension HTA, ici par exemple le nœud 1 peut être rattaché à tout nœud *r* de la branche moyenne tension HTA, r étant différent de *ref ;*
le vecteur de puissances complexes *Sₐ* injectées/soutirées en tous nœuds de la branche moyenne tension HTA ;
le vecteur de puissances complexes *S_{b}* injectées/soutirées en tous nœuds de la branche basse tension BT.

Considérant la branche moyenne tension HTA seule, l'état en tension *Vₐ* de la branche HTA peut être déterminé comme étant solution du système de Kirchhoff suivant.${S}_{a}^{∗} = diag \left({V}_{a}^{∗}\right) ⋅ {Y}_{a} ⋅ {V}_{a}$ (3)

Où le signe « * » indique la conjugaison complexe.

Lorsqu'une branche basse tension est rattachée à la branche moyenne tension HTA, du fait des injections/soutirages, décrits par le vecteur *S_{b}*, dans la branche basse tension, l'état en tension de la branche moyenne tension est modifié et devient *Ṽₐ*.

L'état en tension *Ṽₐ* peut ainsi être considéré comme résolvant un système d'équations de Kirchhoff, différent de la formule (3) mais pouvant en être déduit directement en ajoutant :
au terme diagonal de la matrice *Yₐ* un terme correctif noté correct *Yₐ*(*r,r)*
à la composante *r* du vecteur *Sₐ* un terme correctif noté correct *Sₐ(r).*

Les termes correctifs ci-dessous forment une représentation agrégée de l'influence de la branche basse tension sur la branche moyenne tension HTA, au niveau de son nœud de rattachement r.

Plus précisément, les termes correctifs peuvent s'écrire de la manière suivante :
${correctY}_{a} \left(r, r\right) = - {Y}_{b} \left(1, K\right) ⋅ {\left({Y}_{b}\left(K, K\right)\right)}^{- 1} ⋅ {Y}_{b} \left(K, 1\right)$ (4)
${correctY}_{a} \left(r, r\right) = - {Y}_{b} \left(1, K\right) ⋅ {\left({Y}_{b}\left(K, K\right)\right)}^{- 1} ⋅ {Y}_{b} \left(K, 1\right)$ (5)

Pour le cas où plus d'une branche basse tension BT est rattachée à la branche moyenne tension, les formules (4) et (5) peuvent être appliquées simultanément à toutes les branches basse tension rattachées à la branche moyenne tension, de sorte que chacun des termes diagonaux de la matrice d'admittance de la branche moyenne tension HTA correspondant à un nœud de rattachement à une branche basse tension BT sont corrigés, et chaque composante du vecteur de puissances Sa correspondant à un nœud de rattachement à une branche basse tension BT sont corrigées.

Ainsi, le procédé de régulation permet de prendre en compte les interactions électriques entre la branche moyenne tension HTA et les branches basse tension BT qui lui sont rattachées.

Selon le premier mode de régulation M1 appliquant les premières et deuxièmes commandes optimales, les entrées du premier mode de régulation sont, pour chacune des branches considérées, la matrice d'admittance Y, le nœud de référence ref, la matrice des contraintes définissant les domaines des puissances actives et réactives aux nœuds commandables Fi, le vecteur des puissances actives aux nœuds non-commandables PN et le vecteur des puissances réactives aux nœuds non-commandables QN. Les sorties pour chacune des branches considérées du premier mode de régulation sont la valeur optimisée de l'écart à la tension cible Δ, le vecteur des ajustements des puissances actives aux nœuds commandables PC, le vecteur des ajustements des puissances réactives aux nœuds commandables QC et la valeur d'ajustement de la tension à appliquer pour le régleur en charge du transformateur V.

Les entrées du deuxième mode de régulation M2 sont, pour chacune des branches considérées, la matrice d'admittance Y, le nœud de référence ref, la matrice des contraintes définissant les domaines des puissances actives et réactives aux nœuds commandables C, le vecteur des puissances actives aux nœuds non-commandables PN et le vecteur des puissances réactives aux nœuds non-commandables QN, la tension imposée·au·nœud·de·référence·*V̅*. Les sorties de chacune des branches considérées du deuxième mode de régulation M2 sont la valeur optimisée de l'écart à la tension cible Δ, le vecteur des ajustements des puissances actives aux nœuds commandables PC et le vecteur des ajustements des puissances réactives aux nœuds commandables QC.

Les entrées du troisième mode de régulation M3 sont, pour chacune des branches considérées, la matrice d'admittance Y, le nœud de référence ref, la matrice des contraintes définissant les domaines des puissances actives et réactives aux nœuds commandables C, le vecteur des puissances actives aux nœuds non-commandables PN et le vecteur des puissances réactives aux nœuds non-commandables QN, la tension imposée·au·nœud·de·référence·*V̅*., et le vecteur des valeurs imposées aux puissances actives des nœuds commandables : *·PC*. Les sorties relatives à chacune des branches sont la valeur optimisée de l'écart à la tension cible Δ et le vecteur des ajustements des puissances réactives aux nœuds commandables QC.

Le tableau illustré sur la figure 6 illustre les données reçues en entrée, les variables inconnues ainsi que les résultats obtenus en sortie de chacun des premier, deuxième et troisième modes de régulation M1, M2 et M3.

La figure 7 illustre un exemple de mise en œuvre du procédé de régulation, et plus particulièrement des calculs des commandes optimales pour chacune des branches du réseau de distribution ainsi que de la sélection des commandes optimales à appliquer pour chacune des branches.

Dans cet exemple, la phase d'initialisation durant laquelle les branches basse tension rattachée à la branche moyenne tension sont agrégées en leur nœud de rattachement respectif est mise en œuvre suite au calcul des commandes de régulation pour chaque branche basse tension selon le premier mode de régulation M1.

Ainsi, comme décrit en référence à la figure 6, pour chaque branche basse tension BTᵣ, r étant l'indice identifiant la branche basse tension concernée, les données en entrée sont la matrice d'admittance Yᵣ, le nœud de référence refᵣ, le vecteur des puissances actives aux nœuds non-commandables PNᵣ et le vecteur des puissances réactives aux nœuds non-commandables QNᵣ. Les valeurs obtenues en sortie comprennent l'écart à la tension cible Δᵣ, le vecteur des ajustements des puissances actives aux nœuds commandables PCᵣ, le vecteur des ajustements des puissances réactives aux nœuds commandables QCᵣ et la valeur d'ajustement de la tension Vᵣ, tel que :
$\left({Δ}_{r}^{∘}, {PC}_{r}^{∘}, {QC}_{r}^{∘}, {V}_{r}^{∘}\right) ← REGUL \left({Y}_{r}, {ref}_{r}, {C}_{r}, {PN}_{r}, {QN}_{r}\right)$

Un coefficient γᵣ représentatif de la facilité de mise en œuvre est également associé à chaque branche basse tension.

A l'issue de ce calcul, toutes les puissances actives et réactives aux nœuds de chaque branche basse tension sont connues, ainsi que les tensions aux nœuds, y compris au nœud de référence Vrefᵣ.

Dans ce mode de réalisation, la phase d'initialisation est mise en œuvre suite aux calculs des commandes du premier mode de régulation M1 pour toutes les branches basse tension BTr.

Plus précisément, la valeur du terme de correction correctS à ajouter aux nœuds de rattachement respectifs link(r) de chaque branche basse tension peut être déduite des résultats obtenus suite aux calculs des commandes du premier mode de régulation M1, tel que décrit ci-après :
${{S}_{#}}^{˜} \left(link\left(r\right)\right) = {{S}_{#}}^{˜} \left(link\left(r\right)\right) + correctS$

Pour chaque branche basse tension, un terme correctif correctY est également ajouté à chaque terme diagonal de la matrice d'admittance de la branche moyenne tension qui correspond au nœud de rattachement respectif de chaque branche basse tension tel que :
$\left[{{Y}_{#}}^{˜}\left(link\left(r\right),link\left(r\right)\right)={{Y}_{#}}^{˜}\left(link\left(r\right),link\left(r\right)\right)+correctY\right.$

En variante, la phase d'initialisation est effectuée avant le calcul des commandes du premier mode de régulation. Les commandes du premier mode de régulation M1 peuvent donc être calculées suite à la phase d'initialisation.

Puis, les valeurs des commandes de régulations pour les premier, deuxième et troisième modes de régulation M1, M2, M3 sont calculées successivement pour la branche moyenne tension HTA. Un coefficient de facilité de mise en œuvre est associé à chacune des commandes calculées.

Plus précisément, le calcul pour les commandes de régulation pour le premier mode de régulation M1 pour la branche moyenne tension est le suivant :
$\left({Δ}_{#}^{1}, {PC}_{#}^{1}, {QC}_{#}^{1}, {V}_{#}^{, 1}\right) ← REGUL \left({{Y}_{#}}^{˜}, {ref}_{#}, {C}_{#}, {PN}_{#}^{∘}, {QN}_{#}^{∘}\right)$

Ce calcul permet d'obtenir les puissances actives et réactives complexes et les tensions en chaque nœud de la branche moyenne tension.

Le coefficient de facilité de mise en œuvre coef1 est associé à ces commandes de régulation.

Puis, les commandes de régulation pour le deuxième mode de régulation sont calculées suivant la formule :
$\left({Δ}_{#}^{k , 2}, {PC}_{#}^{k , 2}, {QC}_{#}^{k , 2}, {V}_{#}^{k , 2}\right) ← REGUL \left({{Y}_{#}}^{˜}, {ref}_{#}, {C}_{#}, {PN}_{#}^{∘}, {QN}_{#}^{∘}, \overline{V}\right)$

Les puissances réactives et actives ainsi que la tension aux nœuds de la branche basse tension sont obtenues.

Le coefficient de facilité de mise en œuvre coef2 est associé à ces commandes de régulation.

Puis, les commandes de régulation pour le troisième mode de régulation sont calculées suivant la formule :
$\left({Δ}_{#}^{k , 3}, {PC}_{#}^{k , 3}, {QC}_{#}^{k , 3}, {V}_{#}^{k , 3}\right) ← REGUL \left({{Y}_{#}}^{˜}, {ref}_{#}, {C}_{#}, {PN}_{#}^{∘}, {QN}_{#}^{∘}, \overline{V}, \overline{PC}\right)$

A ce stade, il peut être vérifié si le terme Δ¹, correspondant à la valeur optimisée de l'écart à la tension cible obtenue suite au calcul des commandes de régulation pour le premier mode de régulation M1, satisfait la deuxième plage de sécurité. Plus précisément, il est vérifié si la valeur de Δ¹ est inférieure à la deuxième plage de sécurité, égale à ±3% de la tension cible pour la branche moyenne tension. Si ce n'est pas le cas, une alarme peut être activée indiquant qu'une régulation n'est pas possible. Sinon, le procédé se poursuit avec les calculs des commandes de régulation pour les branches basse tension pour les deuxième et troisième modes de régulation, les commandes pour le premier mode de régulation ayant déjà été calculées pour les branches basse tension.

Plus précisément, le calcul des commandes de régulation selon les trois méthodes de régulation pour la branche moyenne tension fournit trois valeurs de tension pour le nœud de rattachement respectif de chaque branche basse tension. Ces valeurs de tension différentes influent directement sur la valeur au nœud de référence de chaque branche basse tension.

Aussi, pour chaque branche basse tension, les commandes de régulation pour le deuxième mode de régulation sont calculées trois fois, pour chaque valeur de tensions au nœud de rattachement de la branche basse tension, obtenues suite aux calculs des commandes de régulation selon les trois modes de régulation pour la branche moyenne tension.

De même, pour chaque branche basse tension, les commandes de régulation pour le troisième mode de régulation sont calculées trois fois, pour chaque valeur de tensions au nœud de rattachement de la branche basse tension, obtenues suite aux calculs des commandes de régulation selon les trois modes de régulation pour la branche moyenne tension.

A chaque commande calculée est associé un coefficient noté γ, reflétant la facilité de mise en œuvre du mode de régulation.

Les trois calculs effectués pour chaque branche basse tension sont associés à l'indice p, où p = 1, 2 ou 3. « solcmin(p,r) » correspond aux valeurs des coefficients de mise en œuvre des différentes solutions de régulation, pour chaque mode de régulation M1, M2, M3 et pour chaque branche basse tension r. La valeur minimale de solcmin est stockée dans « cmin ».

Pour chaque valeur de p et de r, les calculs suivant sont mis en œuvre pour le calcul des commandes de régulation selon le deuxième mode de régulation.$\begin{matrix}cmin = {γ}_{r}^{∘} \\ solmin \left(p, r\right) ← \left({Δ}_{r}^{∘}, {PC}_{r}^{∘}, {QC}_{r}^{∘}, {V}_{r}^{∘}\right) \\ \left({Δ}_{r}^{k , 2}, {PC}_{r}^{k , 2}, {QC}_{r}^{k , 2}, {V}_{r}^{k , 2}\right) ← REGUL \left({Y}_{r}, {ref}_{r}, {C}_{r}, {PN}_{r}, {QN}_{r}, \overline{V}\right) \\ ⋅ où ⋅ {V}_{r} \left(refr\right) = \overline{V} \left(où \overline{V}\right. = \left|{V}_{#}^{k , p}\left(link\left(r\right)\right)\right|\end{matrix}$

Puis, le coefficient γ²ᵣ, avec l'indice 2 désignant le deuxième mode de régulation est associé à chaque calcul tel que
$\begin{matrix}Si ⋅ \left({Δ}_{r}^{k , 2}<β\right) et \left({γ}_{r}^{2}<cmin\right) \\ cmin = {γ}_{r}^{2} \\ solcmin \left(p, r\right) ← \left({Δ}_{r}^{k , 2}, {PC}_{r}^{k , 2}, {QC}_{r}^{k , 2}, {V}_{r}^{k , 2}\right)\end{matrix}$

Où β représente la première plage de sécurité. La valeur du coefficient est donc modifiée pour chaque branche basse tension durant le calcul des commandes.

Puis, les commandes de régulation pour le troisième mode de régulation sont calculées. $\begin{matrix}\left({Δ}_{r}^{k , 3},{PC}_{r}^{k , 3},{QC}_{r}^{k , 3}{V}_{r}^{k , 3}\right) ← REGUL \left({Y}_{r}, {ref}_{r}, {C}_{r}, {PN}_{r}, {QN}_{r}, \overline{V}, \overline{{PC}_{r}}\right) \\ o ù {V}_{r} \left(refr\right) = \overline{V} \left(où \overline{V}=\left|{V}_{#}^{k , p}\left(link\left(r\right)\right)\right|\right)\end{matrix}$ et·*PCᵣ* = *P̅C̅ᵣ̅*,·la·valeur·des·puissances·actives·aux·nœuds·commandables·au·dernier·pas· de·temps·écoulé,·et·avec ${V}_{r}^{k , 3} \left(refr\right) = \overline{V}$ ·et
${PC}_{r}^{k , 3} = \overline{{PC}_{r}} .$

Puis, le coefficient γ³ᵣ, avec l'indice 3 désignant le troisième mode de régulation est associé à chaque calcul tel que :
$\begin{matrix}Si ⋅ \left({Δ}_{r}^{k , 3}<β\right) et \left({γ}_{r}^{3}<cmin\right) \\ cmin = {γ}_{r}^{3} \\ solcmin \left(p, r\right) ← \left({Δ}_{r}^{k , 3}, {PC}_{r}^{k ? 3}, {QC}_{r}^{k , 3}, {V}_{r}^{k , 3}\right)\end{matrix}$

Afin de déterminer quelles commandes de régulations sont les commandes optimales à appliquer à chaque branche basse tension et à la branche moyenne tension, il est déterminé quel coefficient associé à chaque commande de régulation est le plus petit. Les commandes associées au coefficient le plus petit sont ensuite mises en œuvre comme commandes de régulation optimales.

Suite à la mise en œuvre des commandes optimales, il est déterminé si les valeurs des commandes optimales satisfont le critère d'arrêt prédéfini. Plus précisément, il est déterminé si l'état en tension de la branche moyenne tension HTA et des branches basse tension BT est à nouveau déterminé. Si toutes les tensions en tous nœuds des branches basse tension sont comprises dans la première plage réglementaire, et si toutes les tensions en tous nœuds de la branche moyenne tension sont comprises dans la deuxième plage réglementaire, le procédé de régulation est suspendu jusqu'au pas de temps suivant, la régulation ayant été accomplie de manière satisfaisante.

Dans une autre variante de réalisation, si les valeurs des commandes optimales ne satisfont pas le critère d'arrêt prédéfini, c'est-à-dire qu'elles ne permettent pas d'accomplir la régulation de manière satisfaisante, c'est-à-dire si au moins une tension en un nœud d'une branche basse tension et/ou une tension en un nœud de la branche moyenne tension est en-dehors respectivement de la première plage réglementaire et/ou de la deuxième plage réglementaire, les étapes de calcul des commandes peuvent être mises en œuvre itérativement.

Plus particulièrement, le procédé met en œuvre à nouveau les calculs des commandes optimales pour les trois modes de régulation pour la branche moyenne tension en ayant au préalable corrigé à nouveau la matrice d'admittance et les valeurs des puissances actives et réactives aux nœuds de rattachement de chaque branche basse tension. Notamment, la nouvelle correction peut se baser sur les valeurs de puissances actives et réactives aux nœuds de chaque branche basse tension obtenues suite aux calculs des commandes de régulation pour les deuxième et troisième modes de régulation pour les branches basse tension.

Puis, le calcul des commandes de régulation pour les trois modes de régulation est à nouveau effectué pour la branche moyenne tension, suivi par le calcul des commandes de régulation pour les deuxième et troisième modes de régulation pour les branches basse tension.

Lorsque les valeurs obtenues satisfont le critère d'arrêt prédéfini, c'est-à-dire que toutes les tensions en tous nœuds des branches basse tension sont comprises dans la première plage réglementaire, et toutes les tensions en tous nœuds de la branche moyenne tension sont comprises dans la deuxième plage réglementaire, le processus itératif est stoppé.

Dans une réalisation, si au bout d'un nombre maximal autorisé d'itérations les valeurs des commandes optimales ne satisfont pas le critère d'arrêt prédéfini, une alarme est déclenchée et le procédé est temporisé jusqu'au pas de temps suivant.

Dans une réalisation, le nombre d'itérations maximal est compris entre 2 et 5, et est de préférence égal à 3.

Ces itérations peuvent notamment être utiles lorsque le réseau de distribution est particulièrement chargé, notamment du fait d'un grand nombre de soutirages d'électricité dus à la recharge de véhicules électriques, ou d'un grand nombre d'injections d'électricité par les petits producteurs issus d'une production renouvelable.

Une fois que les commandes optimales de régulation sont sélectionnées, les commandes de régulations relatives aux branches basse tension sont envoyées vers les concentrateurs installés dans les transformateurs HTA/BT. Pour les commandes optimales de régulation relatives à la branche moyenne tension, elles sont envoyées vers l'automate du poste-source où se trouve le système de régulation par réglage en charge du rapport de transformation HTB/HTA.

La figure 8 illustre un mode d'application du procédé de régulation sur un réseau de distribution schématisé.

Le réseau de distribution comprend une branche moyenne tension HTA, alimentée par une branche haute tension HTB (non représentée) au niveau d'un transformateur HTB/HTA comprenant un régleur en charge HTA. Le réseau de distribution comprend en outre une pluralité de branches basse tension BT, alimentées par la branche moyenne tension HTA au niveau d'un transformateur HTA/BT pouvant comprendre un régleur en charge HTA/BT.

A des fins de clarté, seule une branche basse tension BT comprenant un régleur en charge est représentée sur la figure 8.

Chacune des branches moyenne et basse tension comprend une pluralité de nœuds non-commandables, représentés comme des cercles vides sur le schéma, et une pluralité de nœuds commandables, représentés comme des cercles pleins sur le schéma.

Chacune des branches moyenne et basse tension comprend un consommateur dont la consommation est respectivement mesurée par un compteur HTA pour la branche moyenne tension HTA et par un compteur classique BT ou un compteur intelligent BT pour la branche basse tension.

A partir de ces compteurs, les puissances actives et réactives (P, Q)réel, c'est-à-dire les puissances actives et réactives effectivement mesurées dans les branches moyenne ou basse tension, sont transmises vers le poste de conduite régionale en passant par le concentrateur pour les branches basse tension BT. Pour la branche moyenne tension HTA, la transmission peut être faite via un réseau téléphonique commuté (RTC) ou équivalent et/ou réseau cellulaire type GPRS par exemple.

Le réseau de distribution comprend également dans chaque branche moyenne et basse tension au moins un producteur-consommateur, dont la consommation et la production sont respectivement transmises à un compteur intelligent HTA pour la branche moyenne tension HTA et à un compteur intelligent BT pour la branche basse tension BT. Les compteurs intelligents peuvent être situés au niveau d'un nœud commandable.

Les puissances actives et réactives (P, Q)réel, c'est-à-dire les puissances actives et réactives effectivement mesurées dans les branches moyenne ou basse tension au niveau du producteur-consommateur, sont également respectivement transmises vers le poste de conduite régionale en passant par le concentrateur pour les branches basse tension BT. Pour la branche moyenne tension HTA, la transmission peut être faite via un réseau téléphonique commuté (RTC) ou équivalent et/ou réseau cellulaire type GPRS par exemple.

Chaque régleur en charge HTB/HTA et HTA/BT reçoit également la tension Vréel correspondante, c'est-à-dire la tension effective dans chaque branche moyenne ou basse tension.

Le procédé de régulation tel que décrit en référence aux figures 2, 5 et 7, notamment, est mis en œuvre au niveau du poste de conduite régionale. Les commandes de régulation C1, C2, C3 des modes de régulation M1, M2 ou M3 sont calculées durant la mise en œuvre du procédé, pour obtenir les valeurs des commandes optimales de régulation.

Concernant la branche moyenne tension HTA, une fois que les commandes de régulation pour chaque mode de régulation M1, M2 ou M3 ont été calculées et que les commandes optimales de régulation sont sélectionnées, les commandes optimales de régulation sont envoyées vers les dispositifs concernés.

Plus précisément, dans le cas où le premier mode de régulation M1 est appliqué les premières et deuxièmes commandes optimales C1, C2 sont envoyées. Plus particulièrement, la valeur optimale de la tension Vopt à appliquer sur la branche moyenne tension est envoyée au régleur en charge HTB/HTA. Cela correspond aux premières commandes de régulation C1. Lorsque le réglage en charge du transformateur HTA/BT est disponible, la valeur optimale de la tension Vopt à appliquer sur la branche basse tension est envoyée au régleur en charge HTA/BT.

Les puissances actives et réactives optimales (P, Q)opt, qui correspondent aux deuxièmes commandes de régulation C2, sont envoyées vers le compteur HTA qui les transmet vers les nœuds commandables et vers le dispositif de contrôle-commande du producteur consommateur HTA.

Quand le deuxième mode de régulation M2 est appliqué, les deuxièmes commandes de régulation C2 sont appliquées, telles que décrit ci-avant.

Plus précisément, les valeurs optimales des couples P(i)opt et Q(i)opt aux nœuds commandables, telle que déterminées par le procédé de régulation, sont transmises au niveau des compteurs intelligents et des boites de contrôle-commande des nœuds commandables. En pratique, chaque producteur-consommateur en un nœud commandable devra produire ou absorber du réactif (tension trop haute ou trop basse respectivement) selon les valeurs optimales des couples P(i)opt et Q(i)opt calculées. La mise en œuvre opérationnelle de cet ajustement, en « aval compteur » et relevant de la responsabilité de l'usager, comprend donc une série d'actions réalisées par un contrôle-commande chez l'usager comme par exemple un écrêtage de la production, le stockage dans tout moyen de stockage de la production excédentaire, la gestion des flexibilités notamment pour la recharge de véhicule électrique, l'activation du chauffage, etc., et l'ajustement des puissances actives et réactives sur un onduleur.

Enfin, quand le troisième mode de régulation M3 est appliqué, seules les puissances réactives optimales Qopt sont envoyées vers le compteur intelligent HTA qui les transmet au dispositif de contrôle-commande du producteur-consommateur HTA.

Concernant ce mode de régulation, les commandes pour réguler la tension comprennent la production de réactif ou l'absorption de réactif par les usagers en un nœud commandable.

Concernant la branche basse tension, les commandes de régulation C1, C2, C3 sont envoyées au niveau du concentrateur qui détermine quelles commandes appliquer entre les commandes C1 et C2, simultanément, correspondant au premier mode de régulation, la commande C2, correspondant au deuxième mode de régulation, ou la commande C3, correspondant au troisième mode de régulation.

Cela entraîne l'envoi d'une valeur optimale Vopt de tension au nœud de référence de la branche basse tension BT situé au niveau du régleur en charge du transformateur HTA/BT, lorsque ce réglage est disponible, ainsi que des valeurs optimales (P, Q)opt des puissances actives et réactives au niveau des nœuds commandables de la branche basse tension BT lorsque le premier mode de régulation est appliqué. Lorsque le deuxième mode de régulation est appliqué, seules les valeurs optimales des puissances actives et réactives (P, Q)opt sont envoyées au niveau des nœuds commandables de la branche basse tension BT. Enfin, lorsque le troisième mode de régulation est appliqué, seules les valeurs optimales des puissances réactives (Q)opt sont envoyées au niveau des nœuds commandables de la branche basse tension BT.

L'application des deuxièmes et troisièmes commandes de régulation C2, C3 peut être identique à l'application de ces deuxièmes et troisièmes commandes de régulation, décrite ci-avant en référence à la branche moyenne tension HTA.

Les figures 9A et 9B illustrent un exemple détaillé du procédé de régulation selon une réalisation.

Aux étapes S20 et S21, les données fixes de chaque branche basse et moyenne tension BT, HTA sont collectées, tel que décrit à l'étape S1 de la figure 1.

Selon une réalisation, les étapes S22 et suivantes sont mises en œuvre à chaque pas d'un temps prédéfini. A titre d'exemple, le pas de temps est égal à 10 minutes.

A l'étape S22, les données variables de chaque branche basse tension BT sont collectées, tel que décrit à l'étape S3 de la figure 1.

A partir des données fixes et variables de chaque branche basse tension BT, l'état en tension de chaque branche basse tension BT est évalué à l'étape S23. L'état en tension peut être déterminé par toute technique de résolution du problème de « load flow », tel que décrit par exemple en référence à la figure 5.

Puis, les données variables relatives à la branche moyenne tension HTA sont collectées à l'étape S24. A partir des données fixes et variables de la branche moyenne tension HTA, l'état en tension de la branche HTA peut être évalué à l'étape S25. L'état en tension peut être déterminé par toute technique de résolution du problème de « load flow », tel que décrit par exemple en référence à la figure 5.

En variante, la collecte des données variables relatives aux branches basse et moyenne tension peuvent être récupérées simultanément, ou dans un ordre choisi, sans impact sur le fonctionnement du procédé de régulation. De même, les états en tension respectif des branches basse et moyenne tension peuvent être calculés simultanément, ou dans un ordre choisi, sans impact sur le fonctionnement du procédé de régulation.

A l'étape S26, il est déterminé si une régulation sur au moins une branche basse tension est nécessaire. Plus précisément, il est déterminé si l'état en tension effectif de chaque branche basse tension évalué à l'étape S23 est compris dans la première plage de sécurité, égale par exemple à ±8% de la valeur absolue de la tension cible définie pour chaque branche basse tension.

Si aucune régulation n'est nécessaire, il est déterminé à l'étape S27 si une régulation est nécessaire pour la branche moyenne tension. Plus précisément, il est déterminé si l'état en tension effectif de la branche moyenne tension évalué à l'étape S25 est compris dans la deuxième plage de sécurité, égale par exemple à ±3% de la valeur absolue de la tension cible définie pour la branche moyenne tension.

Si aucune régulation n'est nécessaire, le procédé est mis en attente jusqu'au pas de temps suivant.

S'il est détecté qu'une régulation est nécessaire sur au moins une branche basse tension BT, il peut tout de même déterminé si une régulation est nécessaire pour la branche moyenne tension HTA.

Si une régulation est nécessaire, une étape de calcul des commandes de régulation pour le premier mode de régulation M1 sont calculées pour chaque branche basse tension BT à l'étape S28. Plus précisément, tel que décrit en référence aux figures 2 et 7, les commandes de régulation pour le premier mode de régulation comprennent le calcul d'une tension optimale d'ajustement et des puissances actives et réactives optimales.

Puis, à partir des résultats obtenus à l'étape S28, une phase d'agrégation des branches basse tension en leur nœud de rattachement respectif à la branche moyenne tension HTA est effectuée à l'étape S29. Plus précisément, les valeurs des puissances actives et réactives représentatives de l'état en tension de chaque branche basse tension sont ajoutées aux valeurs des puissances actives et réactives du nœud de rattachement de la branche moyenne tension à la branche basse tension concernée.

Puis, les commandes de régulation relatives à chaque mode de régulation parmi les trois modes de régulation sont calculées pour la branche moyenne tension à l'étape S30.

Plus précisément, les commandes de régulation pour le premier mode de régulation M1 comprennent le calcul d'une tension optimale d'ajustement et des puissances actives et réactives optimales. Les commandes de régulation pour le deuxième mode de régulation M2 comprennent le calcul des puissances actives et réactives optimales. Enfin, les commandes de régulation pour le troisième mode de régulation M3 comprennent le calcul des puissances réactives optimales.

Puis, il est déterminé à l'étape S31 si les commandes obtenues permettent d'obtenir un état en tension de la branche moyenne tension HTA compris dans la deuxième plage de sécurité définie ci-avant.

Si ce n'est pas le cas, le procédé est arrêté et une alarme est activée à l'étape S32, indiquant qu'aucune régulation n'est possible.

Si c'est le cas, les commandes de régulation pour les deuxième et troisième modes de régulation M2, M3 sont calculées pour chaque branche basse tension à l'étape S33.

Plus précisément, les commandes de régulation pour le deuxième mode de régulation M2 comprennent le calcul des puissances actives et réactives optimales. Les commandes de régulation pour le troisième mode de régulation M3 comprennent le calcul des puissances réactives optimales.

A l'étape S34, les commandes de régulation optimales pour chaque branche basse tension et la branche moyenne tension sont sélectionnées. Plus précisément, les commandes de régulation à appliquer peuvent être sélectionnées en fonction du coefficient de facilité de mise en œuvre associé à chacune des commandes de régulation. Notamment, les commandes de régulation ayant le plus petit coefficient peuvent être choisies. Par ailleurs, les commandes de régulation peuvent différer d'une branche basse tension et/ou moyenne tension à l'autre.

A l'étape S35, il est déterminé si le critère prédéfini est satisfait. Si le critère d'arrêt prédéfini n'est pas respecté, les étapes S29 à S34 peuvent être mises en œuvre à nouveau de manière itérative, jusqu'à ce que les commandes respectent le critère d'arrêt prédéfini.

Si c'est le cas, les modes de régulation associées aux commandes optimales sont appliquées sur chaque branche basse et moyenne tension du réseau de distribution aux étapes S37 et S38.

A l'étape S39, le procédé est mis en attente jusqu'au pas de temps suivant, pour mettre en œuvre à nouveau l'étape S22.

Dans un mode de réalisation, les étapes S28 de calcul des commandes de régulation du premier mode de régulation M1 pour les branches BT et S29 d'agrégation des branches basse tension peuvent être inversées, de sorte que l'étape d'agrégation est mise en œuvre avant l'étape de calcul des premières commandes de régulation.

## Revendications

1. Procédé de régulation conjointe d'une tension dans une branche moyenne tension (HTA) et dans au moins une, et de préférence dans une pluralité, de branches basse tension (BT) d'un réseau de distribution, le réseau de distribution comprenant une pluralité de générateurs d'énergies, chaque branche basse tension (BT) étant rattachée à la branche moyenne tension (HTA) en un nœud de rattachement au niveau d'un transformateur, chaque branche basse tension (BT) comprenant en outre un nœud de référence, une pluralité de nœuds commandables et une pluralité de nœuds non-commandables, la branche moyenne tension (HTA) étant alimentée par une branche haute tension (HTB) rattachée à la branche moyenne tension (HTA) en un nœud de rattachement au niveau d'un transformateur avec régleurs en charges, la branche moyenne tension (HTA) comprenant en outre un nœud de référence, une pluralité de nœuds commandables et une pluralité de nœuds non-commandables, chaque nœud des branches moyenne tension (HTA) et basse tension (BT) étant soumis à des soutirages et/ou injections d'énergie, le procédé comprenant :
- une définition
°d'une tension cible à respecter en chaque nœud de chaque branche basse tension (BT) , °d'une première plage de sécurité encadrant la tension cible de chaque branche basse tension (BT) ;
°d'une tension cible à respecter en chaque nœud de la branche moyenne tension (HTA),
° d'une deuxième plage de sécurité encadrant la tension cible de la branche moyenne tension (HTA) ;
le procédé étant **caractérisé en ce qu'**il comprend, à chaque pas d'un temps prédéterminé :
- une détermination :
°d'un état en tension effectif de la branche moyenne tension (HTA) pour obtenir des tensions effectives en chaque nœud de la branche moyenne tension (HTA),
°d'un état en tension effectif pour de chaque branche basse tension (BT) pour obtenir des tensions effectives en chaque nœud de chaque branche basse tension (BT),
- une comparaison :
°des tensions effectives de chaque branche basse tension (BT) avec la première plage de sécurité
° des tensions effectives de la branche moyenne tension (HTA) avec la deuxième plage de sécurité ;
- si au moins une tension effective de la branche basse tension (BT) et/ou de la branche moyenne tension (HTA) est en en-dehors respectivement de la première plage de sécurité et/ou de la deuxième plage de sécurité :
°régulation conjointe des branches moyenne et basse tension (BT) par une mise en œuvre d'au moins un mode de régulation choisi parmi un premier, un deuxième et un troisième mode de régulation (M2) sur ladite branche moyenne tension (HTA) et lesdites branches basse tension (BT),
le premier mode de régulation (M1) comprenant un réglage d'un rapport du transformateur HTB/HTA ou HTA/BT et un ajustement des puissances actives et réactives aux nœuds commandables de la branche moyenne et/ou des branches basse tension (BT),
le deuxième mode de régulation (M2) comprenant un ajustement des puissances actives et réactives aux nœuds commandables de la branche moyenne et/ou des branches basse tension (BT), et
le troisième mode de régulation (M3) comprenant un ajustement des puissances réactives aux nœuds commandables de la branche moyenne et/ou des branches basse tension (BT), et **en ce que** la mise en œuvre dudit au moins un mode de régulation est précédée par une phase d'initialisation comprenant :
° une agrégation de données relatives à chaque branche basse tension (BT) en son nœud de rattachement respectif à la branche moyenne tension (HTA), ladite agrégation comprenant :
- pour chaque branche basse tension (BT), indépendamment les unes des autres :
°détermination d'un couple de valeurs de puissances active et réactive représentatives de l'état en tension effectif de chaque branche basse tension (BT), le couple de valeurs de puissances active et réactive représentatifs étant déterminé à partir de valeurs de puissances actives et réactives en chaque nœud de chaque branche basse tension (BT) et d'une valeur de la tension au nœud de référence de chaque branche basse tension (BT),
°ajout dudit couple de valeurs de puissances active et réactive représentatives à la valeur d'une puissance injectée/soutirée au nœud de rattachement respectif de chaque branche basse tension (BT) avec la branche moyenne tension (HTA),
- correction de chaque terme diagonal d'une matrice d'admittance de la branche moyenne tension (HTA), chaque terme diagonal correspondant à un nœud de rattachement respectif de chaque branche moyenne tension (HTA) avec la branche basse tension (BT).

2. Procédé selon la revendication 1, dans lequel la mise en œuvre d'un mode de régulation choisi parmi les premier, deuxième et troisième modes de régulation est précédée par :
- une détermination de commandes de régulation pour le premier mode de régulation (M1) pour chaque branche basse tension (BT)
- puis, une détermination de commandes de régulation pour le premier mode de régulation (M1) pour la branche moyenne tension (HTA),
- puis, une détermination de commandes de régulation pour le deuxième mode de régulation (M2) pour la branche moyenne tension (HTA) à partir au moins des commandes de régulation déterminées pour le premier mode de régulation (M1) pour la branche moyenne tension (HTA),
- puis, une détermination des commandes de régulation pour le troisième mode de régulation (M2) pour la branche moyenne tension (HTA) à partir au moins des commandes de régulation déterminées pour le premier et/ou le deuxième mode de régulation (M2) pour la branche moyenne tension (HTA),
dans lequel une première, une deuxième et une troisième valeurs d'une tension au nœud de rattachement de chaque branche basse tension (BT) à la branche moyenne tension (HTA) sont respectivement obtenues suite à la détermination des commandes de régulation pour le premier, deuxième et troisième modes de régulation pour la branche moyenne tension (HTA)
- puis, pour chaque branche basse tension (BT), successivement, des déterminations des commandes de régulation pour le deuxième mode de régulation (M2) en fonction de la première, de la deuxième et de la troisième valeur de la tension au nœud de rattachement de chaque branche basse tension (BT) avec la branche moyenne tension (HTA),
- puis, pour chaque branche basse tension (BT), successivement, des déterminations des commandes de régulation pour le troisième mode de régulation (M2) en fonction de la première, de la deuxième et de la troisième valeur de la tension au nœud de rattachement de chaque branche basse tension (BT) avec la branche moyenne tension (HTA).

3. Procédé selon la revendication précédente, dans lequel
la détermination des commandes de régulation pour les premier, deuxième et troisième modes de régulation pour la branche moyenne tension (HTA),
puis, la détermination des commandes de régulation pour les deuxième et troisième modes de régulation pour la branche basse tension (BT) en fonction des trois valeurs de la tension au nœud de rattachement de chaque branche basse tension (BT) avec la branche moyenne tension (HTA) , sont mises en œuvre itérativement, jusqu'à ce que les commandes optimales déterminées satisfassent un critère d'arrêt prédéfini, et dans lequel
l'agrégation de chaque branche basse tension (BT) en son nœud de rattachement respectif à la branche moyenne tension (HTA) est effectuée à chaque nouvelle itération, en fonction des commandes de régulation obtenues à une itération précédente.

4. Procédé selon l'une des revendications 1 à 3, dans lequel le mode de régulation à mettre en œuvre parmi les premier, deuxième et troisième modes de régulation (M1, M2, M3) est choisi en fonction d'un coefficient reflétant une facilité de mise en œuvre de chaque mode de régulation, un coefficient différent étant associé à chaque mode de régulation et à chaque type de réseau.

5. Procédé selon l'une des revendications 1 à 4 dans lequel l'agrégation de chaque branche basse tension (BT) en son nœud de rattachement respectif à la branche moyenne tension (HTA) comprend une correction de l'état en tension effectif de la branche moyenne tension (HTA) au niveau de chaque nœud de rattachement de ladite branche moyenne tension (HTA) avec chaque branche basse tension (BT), par une prise en compte de l'état en tension effectif de chaque branche basse tension (BT).

6. Procédé selon la revendication 2 et l'une ou l'autre des revendications 3 à 4, dans lequel l'agrégation de données relatives à chaque branche basse tension (BT) en son nœud de rattachement respectif à la branche moyenne tension (HTA) est effectuée après la détermination des commandes de régulation pour le premier mode de régulation (M1) pour chaque branche basse tension (BT), et avant la détermination des commandes de régulation pour le premier mode de régulation (M1) pour la branche moyenne tension (HTA), l'état en tension effectif de chaque branche basse tension (BT) étant obtenu après la détermination des commandes de régulation pour le premier mode de régulation (M1) pour chaque branche basse tension (BT).

7. Procédé selon l'une des revendications 1 à 6, dans lequel la mise en œuvre d'un mode de régulation comprend l'application de commandes de régulation optimales telles que :
- pour le premier mode de régulation (M1), les commandes optimales de régulation comprennent une valeur optimale d'ajustement d'une tension au nœud de référence de la branche moyenne et/ou des branches basse tension (BT) et des valeurs optimales d'ajustement de puissances actives et réactives aux nœuds commandables de la branche moyenne et/ou basse tension (BT),
- pour le deuxième mode de régulation (M2), les commandes optimales de régulation comprennent des valeurs optimales d'ajustement de puissances actives et réactives aux nœuds commandables de de la branche moyenne et/ou des branches basse tension (BT),
- pour le troisième mode de régulation (M2), les commandes optimales de régulation comprennent des valeurs optimales d'ajustement de puissances réactives aux nœuds commandables de de la branche moyenne et/ou des branches basse tension (BT).

8. Procédé selon la revendication 7, dans lequel les commandes de régulation optimales sont choisies itérativement et en tenant compte d'interactions entre les branches moyenne et basse tension (BT) couplées sur le réseau de distribution.

9. Programme informatique comportant des instructions pour la mise en œuvre du procédé selon l'une des revendications 1 à 8 lorsque ce programme est exécuté par un processeur.

## Patentansprüche

1. Verfahren zur gemeinsamen Regelung einer Spannung in einem Mittelspannungszweig (MS) und in mindestens einem, und vorzugsweise in einer Vielzahl von Niederspannungszweigen (NS) eines Verteilungsnetzes, wobei das Verteilungsnetz eine Vielzahl von Energieerzeugern umfasst, wobei jeder Niederspannungszweig (NS) an den Mittelspannungszweig (MS) an einem Anschlussknoten im Bereich eines Transformators angeschlossen ist, wobei jeder Niederspannungszweig (NS) ferner einen Referenzknoten, eine Vielzahl von steuerbaren Knoten und eine Vielzahl von nicht steuerbaren Knoten umfasst, wobei der Mittelspannungszweig (MS) durch einen Hochspannungszweig (HS) gespeist wird, der an den Mittelspannungszweig (MS) an einem Anschlussknoten im Bereich eines Transformators mit Laststufenschalter angeschlossen ist, wobei der Mittelspannungszweig (MS) ferner einen Referenzknoten, eine Vielzahl von steuerbaren Knoten und eine Vielzahl von nicht steuerbaren Knoten umfasst, wobei jeder Knoten der Mittelspannungs- (MS) und Niederspannungszweige (NS) Energieentnahmen und/oder - einspeisungen unterworfen ist, wobei das Verfahren umfasst:
• eine Definition:
• einer an jedem Knoten jedes Niederspannungszweigs (NS) einzuhaltenden Zielspannung,
• eines ersten Sicherheitsbereichs, der die Zielspannung jedes Niederspannungszweigs (NS) einrahmt;
• einer an jedem Knoten des Mittelspannungszweigs (MS) einzuhaltenden Zielspannung,
• eines zweiten Sicherheitsbereichs, der die Zielspannung des Mittelspannungszweigs (MS) einrahmt;
wobei das Verfahren **dadurch gekennzeichnet ist, dass** es bei jedem Schritt einer vorbestimmten Zeit umfasst:
• eine Bestimmung:
• eines effektiven Spannungszustands des Mittelspannungszweigs (MS), um effektive Spannungen an jedem Knoten des Mittelspannungszweigs (MS) zu erhalten,
• eines effektiven Spannungszustands für jeden Niederspannungszweig (NS), um effektive Spannungen an jedem Knoten jedes Niederspannungszweigs (NS) zu erhalten,
• einen Vergleich:
• der effektiven Spannungen jedes Niederspannungszweigs (NS) mit dem ersten Sicherheitsbereich,
• der effektiven Spannungen des Mittelspannungszweigs (MS) mit dem zweiten Sicherheitsbereich;
• wenn mindestens eine effektive Spannung des Niederspannungszweigs (NS) und/oder des Mittelspannungszweigs (MS) außerhalb des ersten Sicherheitsbereichs bzw. des zweiten Sicherheitsbereichs liegt:
• gemeinsame Regelung der Mittel- und Niederspannungszweige (NS) durch eine Implementierung mindestens eines Regelungsmodus, ausgewählt aus einem ersten, einem zweiten und einem dritten Regelungsmodus (M2) auf dem Mittelspannungszweig (MS) und den Niederspannungszweigen (NS),
wobei der erste Regelungsmodus (M1) eine Einstellung eines Verhältnisses des HS/MS- oder MS/NS-Transformators und eine Anpassung der Wirk- und Blindleistungen an den steuerbaren Knoten des Mittelspannungs- und/oder der Niederspannungszweige (NS) umfasst,
wobei der zweite Regelungsmodus (M2) eine Anpassung der Wirk- und Blindleistungen an den steuerbaren Knoten des Mittelspannungs- und/oder der Niederspannungszweige (NS) umfasst, und
wobei der dritte Regelungsmodus (M3) eine Anpassung der Blindleistungen an den steuerbaren Knoten des Mittelspannungs- und/oder der Niederspannungszweige (NS) umfasst,
und dass der Implementierung des mindestens einen Regelungsmodus eine Initialisierungsphase vorausgeht, umfassend:
• eine Aggregation von Daten bezüglich jedes Niederspannungszweigs (NS) an seinem jeweiligen Anschlussknoten an den Mittelspannungszweig (MS), wobei die Aggregation umfasst:
• für jeden Niederspannungszweig (NS), unabhängig voneinander:
• *Bestimmung eines Paares von Wirk- und Blindleistungswerten, die für den effektiven Spannungszustand jedes Niederspannungszweigs (NS) repräsentativ sind, wobei das Paar von repräsentativen Wirk- und Blindleistungswerten aus Wirk- und Blindleistungswerten an jedem Knoten jedes Niederspannungszweigs (NS) und einem Wert der Spannung am Referenzknoten jedes Niederspannungszweigs (NS) bestimmt wird,*
• *Hinzufügen des Paares von repräsentativen Wirk- und Blindleistungswerten zu dem Wert einer eingespeisten*/*entnommenen Leistung am jeweiligen Anschlussknoten jedes Niederspannungszweigs (NS) mit dem Mittelspannungszweig (MS),*
• Korrektur jedes Diagonalterms einer Admittanzmatrix des Mittelspannungszweigs (MS), wobei jeder Diagonalterm einem jeweiligen Anschlussknoten jedes Mittelspannungszweigs (MS) mit dem Niederspannungszweig (NS) entspricht.

2. Verfahren nach Anspruch 1, bei dem der Implementierung eines Regelungsmodus, ausgewählt aus den ersten, zweiten und dritten Regelungsmodi, vorausgeht:
• eine Bestimmung von Regelungsbefehlen für den ersten Regelungsmodus (M1) für jeden Niederspannungszweig (NS),
• dann, eine Bestimmung von Regelungsbefehlen für den ersten Regelungsmodus (M1) für den Mittelspannungszweig (MS),
• dann, eine Bestimmung von Regelungsbefehlen für den zweiten Regelungsmodus (M2) für den Mittelspannungszweig (MS) aus mindestens den für den ersten Regelungsmodus (M1) für den Mittelspannungszweig (MS) bestimmten Regelungsbefehlen,
• dann, eine Bestimmung von Regelungsbefehlen für den dritten Regelungsmodus (M2) für den Mittelspannungszweig (MS) aus mindestens den für den ersten und/oder den zweiten Regelungsmodus (M2) für den Mittelspannungszweig (MS) bestimmten Regelungsbefehlen,
wobei ein erster, ein zweiter und ein dritter Wert einer Spannung am Anschlussknoten jedes Niederspannungszweigs (NS) an den Mittelspannungszweig (MS) jeweils nach der Bestimmung der Regelungsbefehle für den ersten, zweiten und dritten Regelungsmodus für den Mittelspannungszweig (MS) erhalten werden,
• dann, für jeden Niederspannungszweig (NS), nacheinander, Bestimmungen der Regelungsbefehle für den zweiten Regelungsmodus (M2) in Abhängigkeit von dem ersten, dem zweiten und dem dritten Wert der Spannung am Anschlussknoten jedes Niederspannungszweigs (NS) mit dem Mittelspannungszweig (MS),
• dann, für jeden Niederspannungszweig (NS), nacheinander, Bestimmungen der Regelungsbefehle für den dritten Regelungsmodus (M2) in Abhängigkeit von dem ersten, dem zweiten und dem dritten Wert der Spannung am Anschlussknoten jedes Niederspannungszweigs (NS) mit dem Mittelspannungszweig (MS).

3. Verfahren nach dem vorhergehenden Anspruch, bei dem
die Bestimmung der Regelungsbefehle für die ersten, zweiten und dritten Regelungsmodi für den Mittelspannungszweig (MS),
dann, die Bestimmung der Regelungsbefehle für die zweiten und dritten Regelungsmodi für den Niederspannungszweig (NS) in Abhängigkeit von den drei Werten der Spannung am Anschlussknoten jedes Niederspannungszweigs (NS) mit dem Mittelspannungszweig (MS), iterativ durchgeführt werden, bis die bestimmten optimalen Befehle ein vordefiniertes Abbruchkriterium erfüllen, und bei dem
die Aggregation jedes Niederspannungszweigs (NS) an seinem jeweiligen Anschlussknoten an den Mittelspannungszweig (MS) bei jeder neuen Iteration in Abhängigkeit von den in einer vorhergehenden Iteration erhaltenen Regelungsbefehlen durchgeführt wird.

4. Verfahren nach einem der Ansprüche 1 bis 3, bei dem der zu implementierende Regelungsmodus aus den ersten, zweiten und dritten Regelungsmodi (M1, M2, M3) in Abhängigkeit von einem Koeffizienten ausgewählt wird, der eine Leichtigkeit der Implementierung jedes Regelungsmodus widerspiegelt, wobei jedem Regelungsmodus und jedem Netztyp ein unterschiedlicher Koeffizient zugeordnet ist.

5. Verfahren nach einem der Ansprüche 1 bis 4, bei dem die Aggregation jedes Niederspannungszweigs (NS) an seinem jeweiligen Anschlussknoten an den Mittelspannungszweig (MS) eine Korrektur des effektiven Spannungszustands des Mittelspannungszweigs (MS) im Bereich jedes Anschlussknotens des Mittelspannungszweigs (MS) mit jedem Niederspannungszweig (NS) unter Berücksichtigung des effektiven Spannungszustands jedes Niederspannungszweigs (NS) umfasst.

6. Verfahren nach Anspruch 2 und einem der Ansprüche 3 bis 4, bei dem die Aggregation von Daten bezüglich jedes Niederspannungszweigs (NS) an seinem jeweiligen Anschlussknoten an den Mittelspannungszweig (MS) nach der Bestimmung der Regelungsbefehle für den ersten Regelungsmodus (M1) für jeden Niederspannungszweig (NS) und vor der Bestimmung der Regelungsbefehle für den ersten Regelungsmodus (M1) für den Mittelspannungszweig (MS) durchgeführt wird, wobei der effektive Spannungszustand jedes Niederspannungszweigs (NS) nach der Bestimmung der Regelungsbefehle für den ersten Regelungsmodus (M1) für jeden Niederspannungszweig (NS) erhalten wird.

7. Verfahren nach einem der Ansprüche 1 bis 6, bei dem die Implementierung eines Regelungsmodus die Anwendung optimaler Regelungsbefehle umfasst, derart dass:
• für den ersten Regelungsmodus (M1) die optimalen Regelungsbefehle einen optimalen Anpassungswert einer Spannung am Referenzknoten des Mittelspannungs- und/oder der Niederspannungszweige (NS) und optimale Anpassungswerte von Wirk- und Blindleistungen an den steuerbaren Knoten des Mittelspannungs- und/oder Niederspannungszweigs (NS) umfassen,
• für den zweiten Regelungsmodus (M2) die optimalen Regelungsbefehle optimale Anpassungswerte von Wirk- und Blindleistungen an den steuerbaren Knoten des Mittelspannungs- und/oder der Niederspannungszweige (NS) umfassen,
• für den dritten Regelungsmodus (M2) die optimalen Regelungsbefehle optimale Anpassungswerte von Blindleistungen an den steuerbaren Knoten des Mittelspannungs- und/oder der Niederspannungszweige (NS) umfassen.

8. Verfahren nach Anspruch 7, bei dem die optimalen Regelungsbefehle iterativ und unter Berücksichtigung von Wechselwirkungen zwischen den am Verteilungsnetz gekoppelten Mittel- und Niederspannungszweigen (NS) ausgewählt werden.

9. Computerprogramm, umfassend Anweisungen zur Implementierung des Verfahrens nach einem der Ansprüche 1 bis 8, wenn dieses Programm durch einen Prozessor ausgeführt wird.

## Claims

1. A method for joint regulation of a voltage in a medium-voltage (MV) branch and in at least one, and preferably in a plurality, of low-voltage (LV) branches of a grid, the grid comprising a plurality of energy generators, each low-voltage (LV) branch being connected to the medium-voltage (MV) branch at a connection node at a transformer, each low-voltage (LV) branch further comprising a reference node, a plurality of controllable nodes and a plurality of non-controllable nodes, the medium-voltage (MV) branch being supplied by a high-voltage (HV) branch connected to the medium-voltage (MV) branch at a connection node at an on-load tap-changing transformer, the medium-voltage (MV) branch further comprising a reference node, a plurality of controllable nodes and a plurality of non-controllable nodes, each node of the medium-voltage (MV) and low-voltage (LV) branches being subject to energy extractions and/or injections, the method comprising:
• a definition
• of a target voltage to be respected at each node of each low-voltage (LV) branch,
• of a first safety range surrounding the target voltage of each low-voltage (LV) branch;
• of a target voltage to be respected at each node of the medium-voltage (MV) branch,
• of a second safety range surrounding the target voltage of the medium-voltage (MV) branch;
the method being **characterized in that** it comprises, at each step of a predetermined time:
• a determination:
• of an effective voltage state of the medium-voltage (MV) branch to obtain voltages effective at each node of the medium-voltage (MV) branch,
• of an effective voltage state for each low-voltage (LV) branch to obtain voltages effective at each node of each low-voltage (LV) branch,
• a comparison:
• of the voltages effective of each low-voltage (LV) branch with the first safety range,
• of the voltages effective of the medium-voltage (MV) branch with the second safety range;
• if at least one effective voltage of the low-voltage (LV) branch and/or of the medium-voltage (MV) branch is outside respectively the first safety range and/or the second safety range:
• joint regulation of the medium- and low-voltage (LV) branches by implementing at least one regulation mode selected from a first, second and third regulation modes (M2) on said medium-voltage (MV) branch and said low-voltage (LV) branches,
the first regulation mode (M1) comprising an adjustment of a ratio of the HV/MV or MV/LV transformer and an adjustment of the active and reactive powers at the controllable nodes of the medium-voltage branch and/or low-voltage (LV) branches,
the second regulation mode (M2) comprising an adjustment of the active and reactive powers at the controllable nodes of the medium-voltage branch and/or low-voltage (LV) branches, and
the third regulation mode (M3) comprising an adjustment of the reactive powers at the controllable nodes of the medium-voltage branch and/or low-voltage (LV) branches,
and **in that** implementation of said at least one regulation mode is preceded by an initialization phase comprising:
• an aggregation of data relating to each low-voltage (LV) branch at its respective connection node to the medium-voltage (MV) branch, said aggregation comprising:
• for each low-voltage (LV) branch, independently of one another:
• *determination of a pair of active and reactive power values representative of the effective voltage state of each low-voltage (LV) branch, the representative pair of active and reactive power values being determined from active and reactive power values at each node of each low-voltage (LV) branch and a voltage value at the reference node of each low-voltage (LV) branch,*
• *addition of said pair of representative active and reactive power values to the value of an injected*/*extracted power at the respective connection node of each low-voltage (LV) branch with the medium-voltage (MV) branch,*
• correction of each diagonal term of an admittance matrix of the medium-voltage (MV) branch, each diagonal term corresponding to a respective connection node of each medium-voltage (MV) branch with the low-voltage (LV) branch.

2. The method according to claim 1, wherein implementation of a regulation mode selected from the first, second and third regulation modes is preceded by:
• a determination of regulation commands for the first regulation mode (M1) for each low-voltage (LV) branch,
• then, a determination of regulation commands for the first regulation mode (M1) for the medium-voltage (MV) branch,
• then, a determination of regulation commands for the second regulation mode (M2) for the medium-voltage (MV) branch from at least the regulation commands determined for the first regulation mode (M1) for the medium-voltage (MV) branch,
• then, a determination of regulation commands for the third regulation mode (M2) for the medium-voltage (MV) branch from at least the regulation commands determined for the first and/or the second regulation mode (M2) for the medium-voltage (MV) branch,
wherein a first, second and third values of a voltage at the connection node of each low-voltage (LV) branch to the medium-voltage (MV) branch are respectively obtained following the determination of the regulation commands for the first, second and third regulation modes for the medium-voltage (MV) branch,
• then, for each low-voltage (LV) branch, successively, determinations of the regulation commands for the second regulation mode (M2) as a function of the first, second and third values of the voltage at the connection node of each low-voltage (LV) branch with the medium-voltage (MV) branch,
• then, for each low-voltage (LV) branch, successively, determinations of the regulation commands for the third regulation mode (M2) as a function of the first, second and third values of the voltage at the connection node of each low-voltage (LV) branch with the medium-voltage (MV) branch.

3. The method according to the preceding claim, wherein
the determination of the regulation commands for the first, second and third regulation modes for the medium-voltage (MV) branch,
then, the determination of the regulation commands for the second and third regulation modes for the low-voltage (LV) branch as a function of the three values of the voltage at the connection node of each low-voltage (LV) branch with the medium-voltage (MV) branch,
are implemented iteratively, until the determined optimal commands satisfy a predefined stopping criterion, and in which
the aggregation of each low-voltage (LV) branch at its respective connection node to the medium-voltage (MV) branch is performed at each new iteration, as a function of the regulation commands obtained at a previous iteration.

4. The method according to one of claims 1 to 3, wherein the regulation mode to be implemented among the first, second and third regulation modes (M1, M2, M3) is selected as a function of a coefficient reflecting an ease of implementation of each regulation mode, a different coefficient being associated with each regulation mode and with each type of grid.

5. The method according to one of claims 1 to 4, wherein the aggregation of each low-voltage (LV) branch at its respective connection node to the medium-voltage (MV) branch comprises a correction of the effective voltage state of the medium-voltage (MV) branch at each connection node of said medium-voltage (MV) branch with each low-voltage (LV) branch, by taking into account the effective voltage state of each low-voltage (LV) branch.

6. The method according to claim 2 and one or the other of claims 3 to 4, wherein the aggregation of data relating to each low-voltage (LV) branch at its respective connection node to the medium-voltage (MV) branch is performed after the determination of the regulation commands for the first regulation mode (M1) for each low-voltage (LV) branch, and before the determination of the regulation commands for the first regulation mode (M1) for the medium-voltage (MV) branch, the effective voltage state of each low-voltage (LV) branch being obtained after the determination of the regulation commands for the first regulation mode (M1) for each low-voltage (LV) branch.

7. The method according to one of claims 1 to 6, wherein the implementation of a regulation mode comprises an application of optimal regulation commands such that:
• for the first regulation mode (M1), the optimal regulation commands comprise an optimal adjustment value of a voltage at the reference node of the medium-voltage branch and/or low-voltage (LV) branches and optimal adjustment values of active and reactive powers at the controllable nodes of the medium-voltage and/or low-voltage (LV) branch,
• for the second regulation mode (M2), the optimal regulation commands comprise optimal adjustment values of active and reactive powers at the controllable nodes of the medium-voltage branch and/or low-voltage (LV) branches,
• for the third regulation mode (M2), the optimal regulation commands comprise optimal adjustment values of reactive powers at the controllable nodes of the medium-voltage branch and/or low-voltage (LV) branches.

8. The method according to claim 7, wherein the optimal regulation commands are selected iteratively and by taking into account interactions between the medium-voltage and low-voltage (LV) branches coupled on the grid.

9. A computer program comprising instructions for implementing the method according to one of claims 1 to 8 when this program is executed by a processor.
